# EUROPEAN PATENT APPLICATION

(11) **EP 3 205 733 A1**
(43) Date of publication of application: **16.08.2017**
(21) Application number: 15848554.0
(22) Date of filing: 21.08.2015
(51) Int. Cl.: C22B 34/36, C22B 3/14

(54) **METALLURGICAL PROCESS FOR TUNGSTEN MINERAL RAW MATERIAL WITH NO POLLUTANT DISCHARGE IN ENTIRE PROCESS**

(30) Priority: 09.10.2014 CN 201410528924
(71) Applicant: Jiangxi Rare Earth & Rare Metals Tungsten Group Holding Co., Ltd., Nanchang, Jiangxi 330046 (CN); Central South University, Changsha, Hunan 410083 (CN)
(72) Inventor: LI, Xiaobin, Nanchang Jiangxi 330046 (CN); CUI, Yuanfa, Nanchang Jiangxi 330046 (CN); ZHOU, Qiusheng, Nanchang Jiangxi 330046 (CN); LI, Jianpu, Nanchang Jiangxi 330046 (CN); QI, Tiangui, Nanchang Jiangxi 330046 (CN); XU, Shuang, Nanchang Jiangxi 330046 (CN); LIU, Guihua, Nanchang Jiangxi 330046 (CN); LIN, Guorong, Nanchang Jiangxi 330046 (CN); PENG, Zhihong, Nanchang Jiangxi 330046 (CN); LI, Jihong, Nanchang Jiangxi 330046 (CN); XU, Xiangming, Nanchang Jiangxi 330046 (CN); TONG, Xiaoyi, Nanchang Jiangxi 330046 (CN)
(74) Representative: Mittler, Enrico
(86) International application number: PCT/CN2015/087823
(87) International publication number: WO 2016/054952

(57) **Abstract**

A metallurgical process for a tungsten mineral raw material (100), comprising: employing a weak base leaching agent conducive to forming a local process circulation, the leaching agent generating two or more gases in an evaporative crystallization process, each kind of gas being able to participate again in the synthesis of the leaching agent, and a crystallized separation scrubbing solution being similarly recycled as a leaching agent; and employing a transformation ingredient, the transformation ingredient having a chemical reaction with the tungsten mineral raw material (100) to enable tungsten element to be comprised in an intermediate easily dissolved by the leaching agent, and a leaching residue also comprising an ingredient element, such that at least a part of the leaching residue can be recycled as the ingredient. The process comprises a plurality of closed cycles, and produces no wastewater discharge in the entire process.

## Description

### TECHNICAL FIELD

The present invention relates to a method for preparing APT from tungsten ore/mineral raw material, which belongs to the technical field of tungsten smelting.

The term "crude material" refers to a mixed material obtained by blending a tungsten ore raw material and a compounding ingredient at a certain ratio, and then grinding to a certain degree of fineness.

The term "clinker" refers to a material obtained by grinding and mixing a tungsten ore raw material and a compounding ingredient into a crude material and then calcinating at a high temperature.

The term "oreizer" refers to a material capable of accelerating the reaction between the tungsten ore raw material and the compounding ingredient or lowering the calcination temperature during the crude material calcination.

### PRIOR ART

In prior art, industrial preparation of APT mainly includes the following steps: decomposing the tungsten ore raw material by using caustic soda or soda to obtain a crude sodium tungstate solution; transforming by solution purification-ion exchange or solvent extraction (or by ion-exchange or solvent extraction for impurity removal and transformation) to obtain a pure ammonium tungstate solution; and then crystallizing by evaporation to obtain the APT product.

There are essential disadvantages in the prior art in that a non-circulation or semi-circulation processing system is utilized, and a full circulation process is not achieved. In the prior art, there are at least the following technical problems: a wastewater discharge outlet has to be provided, and the problem of wastewater pollution can not be eradicated completely; assistant materials mostly are consumed for one time, and leaching agent for leaching process is used in excess; after completion of the reactions in the corresponding process steps, these assistant materials will be discharged directly, or will need to be neutralized with corresponding acids or bases before being discharged, and consumption of the assistant materials is large, thus production cost is high; parts of tungsten elements are inevitably carried away by wastewater, thus the element recovery of tungsten is low; with large investment in equipments, long process and low productivity, it is difficult to realize a continuous production.

In such a process for preparing APT, the consumption of the assistant materials is large, and a large amount of wastewater is produced; a large amount of high salt-containing waste solution is produced during the transformation of the sodium tungstate solution, and a wastewater containing ammonical nitrogen is produced by evaporation of the crystallization mother liquor.

There is indeed a technical possibility to change an open process with wastewater discharge into a closed process without wastewater discharge, however, the investment may even be greater than the profit; For this reason, in the prior art, enterprises have to choose the route of discharge, resulting in serious environmental pollution.

### SUMMARY OF THE INVENTION

An object of the present invention is to provide a method for preparing APT from tungsten ore raw material, which has the following advantages: the process is short, the solutions can be recycled, environmental pollution is almost eradicated, and a low cost makes it easy for industrialization.

Therefore, according to one aspect of the present invention, there is provided a method for preparing APT from tungsten ore raw material, the method comprises the steps of:
1) preparing a crude material by finely grinding a tungsten ore raw material and a compounding ingredient, and then mixing them uniformly;
2) calcinating the crude material to obtain a clinker, crushing the clinker and grinding finely;
3) leaching the clinker with a system of ammonium carbonate, ammonium carbonate- ammonium bicarbonate, ammonium carbonate-ammonium tungstate, ammonium carbonate-CO₂, ammonium carbonate-aqua ammonia-CO₂, ammonium carbonate-aqua ammonia, ammonium carbonate-ammonium bicarbonate-ammonium tungstate, ammonium carbonate-ammonium bicarbonate-ammonium tungstate-CO₂, ammonium carbonate-aqua ammonia-ammonium tungstate, ammonium carbonate-ammonium tungstate-CO₂, and/or ammonium carbonate-aqua ammonia- ammonium tungstate-CO₂;
4) subjecting the leached slurry to solid-liquid separation and slag phase washing to obtain a crude ammonium tungstate solution and a leached slag, returning part of the leached slag/residue as a compounding ingredient to step 1) for crude material preparation and stockpiling the remaining part;
5) purifying the crude ammonium tungstate solution for impurity removal;
6) subjecting the purified solution to evaporative crystallization to liberate APT and obtain ammonia gas and carbon dioxide gas at the same time;
7) after crystallization, subjecting the slurry to liquid-solid separation and/or washing/ scrubbing, thus obtaining a crystallization mother liquor and a solid phase, subjecting the solid phase to washing with water and/or ammonium salt solution and oven drying, then obtaining the APT product (or getting into a subsystem of next stage for dissolution, crystallization and purification), returning the crystallization mother liquor along with the ammonia gas and carbon dioxide collected in step 6) to the clinker leaching step 3), and circulatorily leaching the clinker after supplementing the consumption of ammonium carbonate (which may be partly replaced by ammonium bicarbonate or aqua ammonia and CO₂).

Preferably, said tungsten ore raw material includes a scheelite, a wolframite, a mixed ore of wolframite-scheelite, and/or a tungsten slime; Preferably, when preparing the crude material, in accordance with a molecular ratio of CaO/WO₃ or (CaO+FeO)/WO₃ or (CaO+MnO)/WO₃ or (CaO+FeO+MnO)/WO₃ in the crude material being at least 1.0, the leached slag is added preferably in an amount of 1.5-6.0, more preferably 3.0-4.0, and more preferably 3.3-3.6; particle size of the crude material is not particularly limited, but preferably not larger than 200µm, more preferably not larger than 100µm, and more preferably not larger than 40µm; the crude material is calcinated at a temperature of not lower than 500°C, preferably 800-1050°C, and more preferably 850-950°C.

Preferably, during the crude material preparation, a mineralization agent is added, preferably calcium fluoride, to accelerate the reaction between the tungsten ore raw material and the compounding ingredient, thus the calcination temperature is significantly reduced.

Preferably, calcination time for the crude material is 0.5-8.0h, preferably 1.0-3.0h, and more preferably 2.0h; when the tungsten ore raw material is a scheelite, calcination atmosphere is not particularly limited, preferably a neutral or an oxidizing atmosphere.

Preferably, when the tungsten ore raw material is a wolframite, a mixed ore of wolframite- scheelite, and/or a tungsten slime, the calcination atmosphere is a neutral or a reducing atmosphere, preferably a neutral atmosphere; particle size of the clinker is not particularly limited, but preferably not larger than 200µm, still preferably not larger than 74µm, and still preferably not larger than 45µm.

Preferably, a part of CO₂ in the leaching system is from a furnace (kiln) gas produced during the calcination of the crude material or from a commercial CO₂, and another part of CO₂ is from the CO₂ produced during the evaporative crystallization of the ammonium tungstate solution.

Preferably, CO₂ can be introduced during leaching, or it can be introduced before leaching.

Preferably, the concentration of ammonium carbonate in the initial system for leaching is greater than 20g-(NH₄)₂CO₃/100g-H₂O, preferably is the concentration of its saturated solution for the system, while ammonium bicarbonate is added in a solution or solid form, and the added amount of ammonium bicarbonate is not particularly limited, preferably not less than 1.0 times of the amount that is required to convert the calcium in the clinker into CaCO₃(theoretical amount), and more preferably is 1.1-1.4 times of the theoretical amount; the concentration of ammonium tungstate is not particularly limited, as long as that after tungsten in the clinker is sufficiently leached, the concentration of ammonium tungstate in the resultant solution is ensured not exceeding the equilibrium concentration for the system;the added amount of aqua ammonia is not particularly limited either, but preferably the mass percentage of NH₃ in the initial system for leaching is 0-28%, more preferably 5-20%, and more preferably 5-10%; clinker leaching is carried out in a closed system, and when the clinker is leached with the system of ammonium carbonate, the system of ammonium carbonate-ammonium bicarbonate, the system of ammonium carbonate-aqua ammonia, the system of ammonium carbonate-ammonium bicarbonate-ammonium tungstate, the system of ammonium carbonate-aqua ammonia-ammonium tungstate, and the system of ammonium carbonate-ammonium tungstate, absolute pressure of the reaction system is not particularly limited, but when the clinker is leached with the system of ammonium carbonate-CO₂, the system of ammonium carbonate-ammonium bicarbonate-CO₂, the system of ammonium carbonate-aqua ammonia-CO₂, the system of ammonium carbonate-ammonium tungstate-CO₂, the system of ammonium carbonate-aqua ammonia-ammonium tungstate-CO₂, and the system of ammonium carbonate-ammonium bicarbonate-ammonium tungstate-CO₂, absolute pressure of the reaction system needs to be controlled not less than 1 atm, preferably 2 atm;
Preferably, leaching temperature is not lower than 5°C, preferably 10-80°C, more preferably 20-70°C, and more preferably 30-50°C;
Preferably, leaching time is not particularly limited, as long as that tungsten in the clinker is ensured to be leached sufficiently; preferably the leaching time is 0.5-8.0 h, more preferably the leaching time is 2-5 h; purifying process for impurity removal comprises a process of removing at least one of molybdenum, phosphorus, tin, arsenic, silicon, iron, sodium, potassium, bismuth, antimony, calcium, and magnesium;
According to another aspect of the present invention, a system for preparing APT by the method of claim 1 is provided, which comprises:
1) an ore grinding equipment A, wherein after preparing and metering of a tungsten ore raw material and a compounding ingredient, the ore grinding equipment A is used for finely grinding the various raw materials and uniformly mixing, such that a crude material with a certain fineness and uniformity is produced;
2) a calcinating kiln (furnace), wherein the crude material produced is put into the calcinating kiln (furnace) for calcination, such that a clinker is obtained after cooling;
3) an ore grinding equipment B, wherein the calcinated clinker is finely ground by using the ore grinding equipment B;
4) a leaching equipment, wherein the clinker is leached in the leaching equipment;
5) a filtering equipment, wherein leached slurry is filtered for washing by using the filtering equipment;
6) an impurity removal equipment, wherein crude ammonium tungstate solution is purified inside the impurity removal equipment for impurity removal; and
7) a crystallizing equipment, wherein refined solution of ammonium tungstate is subjected to evaporative crystallization inside the crystallizing equipment.

Preferably, said ore grinding equipment A is selected from: a vibration mill, a ball mill, a rod mill, an autogenous mill, a stirred mill, an overhang roll crusher, a tower mill, a colloidal mill, a centrifugal mill, a high pressure disc mill, a Raymond mill, and an airflow crusher.

Preferably, said calcinating kiln (furnace) includes: a static calcinating kiln (furnace) and a dynamic calcinating kiln (furnace).

Preferably, said ore grinding equipment B is selected from: a twin-roller machine, a vibration mill, a ball mill, a rod mill, an autogenous mill, a stirred mill, an overhang roll crusher, a tower mill, a colloidal mill, a centrifugal mill, a high pressure disc mill, a Raymond mill, and an airflow crusher.

Preferably, said leaching equipment may be a single leaching equipment, or 2-4 leaching equipments can be used in series.

Preferably, said leaching equipment may be a stirring type leaching equipment, or it may be a ball-milling type leaching equipment.

Preferably, said leaching equipment can be sealed, and can withstand a pressure of 4 atm.

Preferably, said filtering equipment is a suction filtering equipment, a pressure filtering equipment, or a naturally filtering tank.

Preferably, said impurity removal equipment is an impurity removal tank, a filtering equipment, or a settling tank.

Preferably, a stirring device is provided within said impurity removal tank.

The advantages of the present invention with respect to the exsisting methods of industrial production of APT are:
1) A closed circulation of solution is achieved during the preparation of APT from tungsten ore raw material, thus the environmental pollution problems caused by vast wastewater discharges during the production of APT can be eliminated theoretically;
2) By calcinating and thus transforming the tungsten ore raw material, tungsten therein is contained instead in a material from which it is easily leached by ammonium carbonate solution, thus low-temperature leaching of tungsten is achieved, and energy consumption or cost of the leaching process is reduced, and meanwhile, the leached slag can also be recycled for use as the compounding ingredient during the transformation of the tungsten ore raw material;
3) By using an inexpensive and readily recyclable system of ammonium carbonate to leach the tungsten ore clinker, a ammonium tungstate solution is obtained directly, thus eliminating the transform step of sodium tungstate solution to ammonium tungstate solution, the process is simplified;
4) By recycling various assistant materials, the consumption thereof is greatly reduced, and the cost of processing is lowered significantly;
5) Simplified operation is convenient for control and industrial applications.

According to the present invention, it is not obvious for those skilled in the art to use a system of "ammonium carbonate-ammonium bicarbonate-ammonium tungstate", or "ammonium carbonate- ammonium tungstate-CO₂", or "ammonium carbonate-aqua ammonia-ammonium tungstate", or "ammonium carbonate-aqua ammonia", or "ammonium carbonate", or "ammonium carbonate- ammonium bicarbonate", or "ammonium carbonate-aqua ammonia-CO₂", or "ammonium carbonate-aqua ammonia-ammonium tungstate-CO₂", or "ammonium carbonate-ammonium bicarbonate-ammonium tungstate-CO₂", or "ammonium carbonate-CO₂", or "ammonium carbonate-ammonium tungstate", or "ammonium carbonate-ammonium bicarbonate-CO₂", as the leaching solution, the reason for that is: less reactive raw materials, such as scheelites, wolframites, mixed ores of wolframite-scheelite, and tungsten slimes, can not be treated with weakly basic systems (or with very low efficiencies). Currently in tungsten smelting industry, a system of strong acids (such as hydrochloric acid) or strong bases (such as sodium hydroxide) is generally used, and the tungsten ore raw material is leached under high temperatures and high pressures; while systems such as "ammonium carbonate-ammonium bicarbonate-ammonium tungstate", "ammonium carbonate-ammonium tungstate-CO₂", "ammonium carbonate-aqua ammonia-ammonium tungstate", "ammonium carbonate-aqua ammonia", "ammonium carbonate", "ammonium carbonate- ammonium bicarbonate", "ammonium carbonate-aqua ammonia-CO₂", "ammonium carbonate-aqua ammonia-ammonium tungstate-CO₂", "ammonium carbonate-ammonium bicarbonate-ammonium tungstate-CO₂", "ammonium carbonate-CO₂", "ammonium carbonate-ammonium tungstate", and "ammonium carbonate-ammonium bicarbonate-CO₂" are weakly basic systems, which have to undergo transformation steps of raw materials in order for leaching to be achieved.

According to the present invention, a system of "ammonium carbonate-ammonium bicarbonate-ammonium tungstate", or "ammonium carbonate-ammonium tungstate-CO₂", or "ammonium carbonate-aqua ammonia-ammonium tungstate", or "ammonium carbonate-aqua ammonia", or "ammonium carbonate", or "ammonium carbonate-ammonium bicarbonate", or "ammonium carbonate-aqua ammonia-CO₂", or "ammonium carbonate-aqua ammonia-ammonium tungstate-CO₂", or "ammonium carbonate-ammonium bicarbonate-ammonium tungstate-CO₂", or "ammonium carbonate-CO₂", or "ammonium carbonate-ammonium tungstate", or "ammonium carbonate-ammonium bicarbonate-CO₂" is selected, materials of the leaching system are converted to ammonia gas and carbon dioxide after crystallization step, just to get into the leaching system supplementarily, thus complete recycling of the assistant materials is achieved, the traditional open-noncirculatory or open-semicirculatory system is completely disused, pollutant discharge is eliminated, and an environment-friendly metallurgy is truly realized.

According to the present invention, not only a good leaching effect can be obtained when the liquid-solid ratio for leaching is relatively high, but the leaching rate of tungsten in the clinker is not decreased even when the liquid-solid ratio for leaching is less than 10, and the concentration of WO₃ in the resultant leaching solution is still sufficient for industrial production.

According to the present invention, a system of "ammonium carbonate-ammonium bicarbonate -ammonium tungstate", or "ammonium carbonate-ammonium tungstate-CO₂", or "ammonium carbonate-aqua ammonia-ammonium tungstate", or "ammonium carbonate-aqua ammonia", or "ammonium carbonate", or "ammonium carbonate-ammonium bicarbonate", or "ammonium carbonate-aqua ammonia-CO₂", or "ammonium carbonate-aqua ammonia-ammonium tungstate- CO₂", or "ammonium carbonate-ammonium bicarbonate-ammonium tungstate-CO₂", or "ammonium carbonate-CO₂", or "ammonium carbonate-ammonium tungstate", or "ammonium carbonate-ammonium bicarbonate-CO₂" is used for clinker leaching, a good leaching effect for tungsten can be obtained even when the liquid-solid ratio for leaching is 4, the concentration of WO₃ in the resultant leaching solution is relatively high, which is very suitable for industrial production.

According to the present invention, a closed circulatory process is employed, providng only discharge outlets for wasteslag without discharge outlets for wastewater, thus the pollution problem of wastewater discharge is completely eliminated.

According to the present invention, assistant materials are no longer for disposable consumption, the leaching agent for the leaching process is recycled for use; In case that the assistant materials are used in excess, they are no longer discharged outside directly after completion of reactions in the corresponding process steps, no corresponding acids or bases are needed for neutralization, thus the consumption of the assistant materials is greatly reduced, and the production cost is lowered significantly.

According to the present invention, a circulatory metallurgical process is realized, "wastewater" once in the conventional process is all used up, completely avoiding the situation that part of tungsten elements is wastefully discharged; therefore, the element recovery of tungsten is also increased.

According to the present invention, an integrated production can be realized, working environments of the plant can be improved greatly, return on equipment investment is significantly increased, the process is shortened, productivity is substantially enhanced, and a continuous automatic production can be realized.

According to the present invention, a procedure for pretreating the tungsten ore raw material is additionally provided, and a system of "ammonium carbonate-ammonium bicarbonate-ammonium tungstate", or "ammonium carbonate-ammonium tungstate-CO₂", or "ammonium carbonate-aqua ammonia-ammonium tungstate", or "ammonium carbonate-aqua ammonia", or "ammonium carbonate", or "ammonium carbonate-ammonium bicarbonate", or "ammonium carbonate-aqua ammonia-CO₂", or "ammonium carbonate-aqua ammonia-ammonium tungstate-CO₂", or "ammonium carbonate-ammonium bicarbonate-ammonium tungstate-CO₂", or "ammonium carbonate-CO₂", or "ammonium carbonate-ammonium tungstate", or "ammonium carbonate-ammonium bicarbonate-CO₂" is used for leaching tungsten ore clinker; leaching conditions are mild, leaching agents are cheap and readily available, assistant materials are recyclable for use, and thus wastewater discharge from production can be eliminated in theory.

According to the present invention, a brand new concept or process for preparing APT is presented which totally departs from prior art; the step of transforming sodium tungstate solution, which would result in a lot of wastewater, is omitted, a solution of ammonium tungstate is obtained directly, thus wastewater discharge from APT production is eliminated fundamentally, and recycling of assistant materials and solutions is realized.

According to the present invention, the process is simple, the operation is easy, the production cost is low, and there is no wastewater discharge, thus environmental pollution is minimized.

### BRIEF DESCRIPTION OF ACCOMPANYING DRAWINGS

Figure 1 is a schematic view showing the structure and principle of a system for preparing APT from tungsten ore raw material according to the present invention.
Figure 2 is a flow diagram showing a process for preparing APT from tungsten ore raw material according to the present invention.

### DETAILED DESCRIPTION OF THE EMBODIMENTS OF THE

### INVENTION

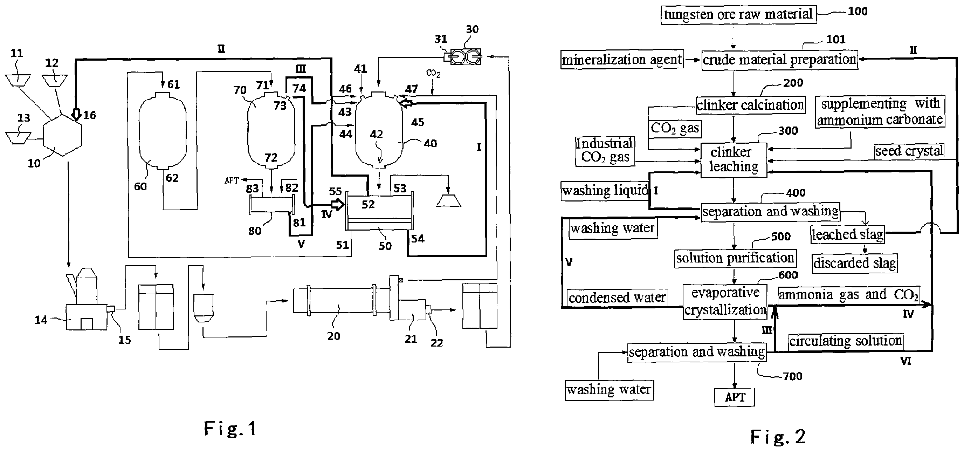

Examples of the present invention will be further illustrated below with reference to Figs. 1-2.

As shown in Fig. 1, in the present invention, a metallurgical process for tungsten-containing ore raw materials comprises the steps of:
A W-containing ore/mineral raw material 100 and a compounding ingredient MN (M represents a cation, and N represents an anion) are blended in a proportion to obtain a crude material 101;
The crude material is calcinated 200 to promote its chemical reactions, such that it is transformed into a clinker containing M and W ions, thus the clinker is endowed with a high chemical reactivity;
A weak base AN (A is a cation) solution/agent is used to leach the clinker (the traditional bias that an excess strong base is used for leaching is completely abandoned), such that the clinker is leached 300, and during the circulatory reactions, feedback solutions from various steps are recovered, and in accordance with actual situations, it is required to supplement the consumption of the weak base AN;
A leached slurry is subjected to solid-liquid separation 400 to obtain a crude solution containing A and W ions and a leached slag containing M, the slag phase is washed, the washing liquid is fed back to the step of clinker leaching( the first closed circulation); according to actual needs, at least part of the leached slag is fed back to the step of crude material preparation (the second closed circulation) serving as the compounding ingredient, and the remaining part of the leached slag, if any, is stockpiled;
The crude solution containing A and W ions is subjected to at least one stage of purification for impurity removal 500 (preferably, an induced-draft device can be additionally provided in the last stage);
The purified solution is subjected to evaporative crystallization 600, to liberate an intermediate product containing element of W; at the same time, the released gas associated with element of A and the gas associated with element of N are returned to the step of clinker leaching 300 (the third closed circulation), and the evaporated water is fed back to the step of solid-liquid separation of the leached slurry 300 (the fourth closed circulation);
The slurry after crystallization is subjected to liquid-solid separation 700, to obtain a crystallization mother liquor and a solid phase, the solid phase is washed with water and/or ammonium salt solution, and after oven drying, a final product containing element of W is obtained (preferably the solid phase is again dissolved and crystalized to obtain a final product with a higher purity); and the crystallization mother liquor is also returned to the step of clinker leaching (the fifth closed circulation).

Therefore, the process comprises a plurality of closed circulations, and there is no wastewater discharge throughout.

As shown in Fig. 2, in the present invention, a metallurgical system of tungsten ore raw material successively comprises:
A device for crude material preparation 10, which is provided with an inlet for ore raw material 11 and an inlet for compounding ingredient 12 (preferably also provided with an inlet for mineralization agent 13; preferably each inlet is also provided with a metering device), a device for finely grinding crude material (including homogenizer) 14, an outlet for crude material 15, and a receiving port for leached slag 16;
A calcinating kiln (furnace) 20, which is in communication with the outlet for crude material 15 via a feedstock metering device and a crude material tank, and has a heating device, a heat insulating device (preferably further comprising a cooling device 21), an atmosphere (oxidizing atmosphere, reducing atmosphere, or neutral atmosphere) controlling device, and an outlet for coarse clinker 22;
A device for finely grinding clinker 30, which is in communication with the outlet for coarse clinker 22 via a clinker tank, and has an ore grinder and an outlet for fine clinker 31;
A leaching device 40, which is in communication with the outlet for fine clinker 31, and has an inlet for leaching agent 41, an outlet for leached slurry 42, a recovering port for feedback gas 43, a recovering port for crystallization slurry separating-washing liquid 44, a recovering port for slag phase washing liquid 45, and an inlet for seed crystal 46 (preferably further comprising an inlet for carbon dioxide 47);
A solid-liquid separating device (preferably filtering device) for leached slurry, which is in communication with the outlet for leached slurry 42, and has a filtering washer for leached slag containing elements of the compounding ingredient 50, an outlet for crude solution containing element of tungsten 51, a leached slag feedback port 52, an outlet to a stockpiling tank for the remaining leached slag 53, a washing liquid feedback outlet 54, and a receiving port for condensed water of evaporative crystallization 55, the solid-liquid separating device being in communication with the inlet for seed crystal 46 of the leaching device 40 on the feedback way to the receiving port for leached slag 16 of the device for crude material preparation 10;
At least one stage of purifying device for impurity removal 60, the inlet 61 for the first stage is in communication with the outlet 51 for crude solution containing element of tungsten, each stage is provided with an inlet for purifying agent for impurity removal and an impurity collector, and the last stage is provided with an outlet 62 for refined solution containing element of tungsten (preferably the last stage is additionally provided with an induced-draft device);
A crystallizing device 70, its inlet 71 is in communication with the outlet 62 for crude solution containing element of tungsten, it is provided with an outlet 72 for crystallization slurry, a gas feedback port 73 for feeding back to the leaching device, and an outlet 74 for condensed water (preferably is provided with a controller for evaporative crystallization of the crude solution of tungsten product);
A liquid-solid separating device 80 for crystallization slurry, which is in communication with the outlet 72 for the crystallization slurry, it is provided with an outlet 81 for crystallization mother liquor returning to the leaching device 40, an inlet 82 for solid phase washing water, and an outlet 83 for tungsten product (preferably being in communication with a next stage of subsystem for dissolution, crystallization, and purification).

According to the present invention, a tungsten ore raw material is finely ground with a certain amount of calcium-containing material and mineralization agent, and then mixed uniformly to obtain a crude material; when preparing the crude material, in accordance with a molecular ratio of CaO/WO₃, or (CaO+FeO)/WO₃, or (CaO+MnO)/WO₃, or (CaO+FeO+MnO)/WO₃ in the crude material being at least 1.0, the calcium-containing material is added preferably in an amount of 1.5-6.0, more preferably 3.0-4.0, and more preferably 3.3-3.6;
When preparing the crude material, the added mineralization agent is a fluoride, and calcium fluoride is preferred; calcium fluoride is added in an amount that is 0.5-7% (mass percentage) of the amount of dry tungsten ore raw material, preferably 1-3% (mass percentage); particle size of the crude material is not particularly limited, but preferably not larger than 200µm, more preferably not larger than 100µm, and more preferably not larger than 40µm; calcination temperature for the crude material is not lower than 500°C, preferably calcination temperature for the crude material is 800-1050°C, and more preferably 850-950°C; calcination time is not particularly limited, an extended calcination time is required for a low temperature, and in order to convert tungsten in the crude material into Ca₃WO₆ and/or Ca₂FeWO₆ and/or Ca₂MnWO₆, preferably the calcination time is 0.5-8.0h, more preferably 1.0-3.0h, and more preferably calcination is carried out at 850-950°C for 2.0h.

For a scheelite raw material, calcination atmosphere is not particularly limited, preferably a neutral or an oxidizing atmosphere is used; for a wolframite, a mixed ore of wolframite-scheelite, and/or a tungsten slime raw material, the calcination atmosphere is a neutral or a reducing atmosphere, and a neutral atmosphere is preferred. In the present invention, a mixed material containing Ca₃WO₆ and/or Ca₂FeWO₆ and/or Ca₂MnWO₆ is added to a system of ammonium salt solution, leached under an enclosed condition, and after completion of leaching, the leached slurry is subjected to separation and washing to obtain an ammonium tungstate solution.

Preferably, said Ca₃WO₆ and/or Ca₂FeWO₆ and/or Ca₂MnWO₆ may be a pure compound that is artificially synthesized, or it may be a mixture (clinker) containing Ca₃WO₆ and/or Ca₂FeWO₆ and/or Ca₂MnWO₆ after treatment of the tungsten ore raw material; particle size of the mixed material of Ca₃WO₆ and/or Ca₂FeWO₆ and/or Ca₂MnWO₆ is not larger than 200µm, preferably smaller than 45µm; said system of ammonium salt solution may be a system of ammonium carbonate-ammonium bicarbonate-ammonium tungstate, a system of ammonium carbonate-ammonium tungstate-CO₂, a system of ammonium carbonate-aqua ammonia-ammonium tungstate, a system of ammonium carbonate-aqua ammonia, a system of ammonium carbonate, a system of ammonium carbonate-ammonium bicarbonate, a system of ammonium carbonate-aqua ammonia- CO₂, a system of ammonium carbonate-aqua ammonia-ammonium tungstate-CO₂, a system of ammonium carbonate-ammonium bicarbonate-ammonium tungstate-CO₂, a system of ammonium carbonate-CO₂, a system of ammonium carbonate-ammonium tungstate, or it may also be a system of ammonium carbonate-ammonium bicarbonate-CO₂.

Preferably, when Ca₃WO₆ and/or Ca₂FeWO₆ and/or Ca₂MnWO₆ is leached with the system of ammonium carbonate, the system of ammonium carbonate-ammonium bicarbonate, the system of ammonium carbonate-aqua ammonia, the system of ammonium carbonate-ammonium bicarbonate-ammonium tungstate, the system of ammonium carbonate-aqua ammonia-ammonium tungstate, and the system of ammonium carbonate-ammonium tungstate, absolute pressure of the leaching system is not particularly limited; and when Ca₃WO₆ and/or Ca₂FeWO₆ and/or Ca₂MnWO₆ is leached with the system of ammonium carbonate-CO₂, the system of ammonium carbonate-ammonium bicarbonate-CO₂, the system of ammonium carbonate-aqua ammonia-CO₂, the system of ammonium carbonate-ammonium tungstate-CO₂, the system of ammonium carbonate-aqua ammonia-ammonium tungstate-CO₂, and the system of ammonium carbonate-ammonium bicarbonate-ammonium tungstate-CO₂, CO₂ is introduced during leaching to control the absolute pressure of the leaching system to be not less than 1atm, preferably 1.5-2.5atm, and more preferably 2atm. Preferably, the concentration of ammonium carbonate in the leaching system is greater than 20g-(NH₄)₂CO₃/100g-H₂O, and a saturated solution of ammonium carbonate is preferred.

Preferably, in said solution system of ammonium carbonate-ammonium tungstate-ammonium bicarbonate, ammonium carbonate-ammonium tungstate-CO₂, ammonium carbonate-aqua ammonia-ammonium tungstate, ammonium carbonate-ammonium tungstate, ammonium carbonate- aqua ammonia-ammonium tungstate-CO₂, and ammonium carbonate-ammonium bicarbonate- ammonium tungstate-CO₂, the concentration of ammonium tungstate is not particularly limited either, as long as after tungsten in Ca3W06 and/or Ca₂FeWO₆ and/or Ca₂MnWO₆ is fully leached, the concentration of ammonium tungstate in the resulting solution does not exceed its solubility in the system.

Preferably, in said solution system of ammonium carbonate-ammonium bicarbonate, ammonium carbonate-ammonium tungstate-ammonium bicarbonate, ammonium carbonate- ammonium bicarbonate-CO₂, and ammonium carbonate-ammonium bicarbonate-ammonium tungstate-CO₂, the added amount of ammonium bicarbonate is not particularly limited, preferably not less than 1.0 times of the theoretical amount, and more preferably 1.1-1.4 times of the theoretical amount.

Preferably, in said solution system of ammonium carbonate-aqua ammonia-ammonium tungstate, ammonium carbonate-aqua ammonia-ammonium tungstate-CO₂, ammonium carbonate-aqua ammonia, and ammonium carbonate-aqua ammonia-CO₂, the added amount of aqua ammonia is not particularly limited either, the mass percentage of NH₃ in the initial system for leaching is preferably 0-28%, more preferably 5-20%, and more preferably 5-10%.

Preferably, pH of the leaching system is controlled to be not less than 8.0. Leaching temperature is not lower than 5°C, preferably 10-80°C, more preferably 20-70°C, and more preferably 30-50°C; leaching time is not particularly limited, as long as that tungsten in Ca3W06 and/or Ca₂FeWO₆ and/or Ca₂MnWO₆ can be fully leached, and is preferably 0.5-8.0h, more preferably leaching time is 2.0-5.0h.

Preferably, the initial liquid-solid ratio for the leaching system is not less than 1:1mL/g, preferably 10:1 - 4:1mL/g.

Preferably, feeding materials can be done in multiple stages to reduce the final liquid-solid ratio for the leaching system; preferably feeding materials is done in two stages, such that the final liquid-solid ratio for the leaching system is controlled to be 3:1-4:1mL/g. Preferably, said ammonium carbonate solution may also be partially substituted with ammonium bicarbonate solution and aqua ammonia, or with aqua ammonia and CO₂.

When the concentration of (NH₄)₂WO₄ is higher in the solution, especially if there is a substantial amount of NH₄OH, then secondary reactions will take place between (NH₄)₂WO₄ and the high reactive CaCO₃ generated during leaching, and CaWO₄ is produced which is difficult to be leached with ammonium carbonate solution, resulting in the loss of tungsten. The main reactions probably are:

CaCO₃ + 2NH₄OH ⇄ Ca(OH)₂ + (NH₄)₂CO₃ (1)

Ca(OH)₂ + (NH₄)₂WO₄ =CaWO₄ + 2NH₄OH (2)

Reaction (2) occurs more easily, while generally reaction (1) is difficult; however, the newly generated CaCO₃ during the leaching of Ca₃WO₆ is highly reactive, reaction (1) is likely to occur, and with progress of the leaching process, the concentrations of NH₄OH and (NH₄)₂WO₄ will keep increasing, reaction (1) and reaction (2) will be enhanced, eventually resulting in an increased loss of tungsten in case of a higher concentration of (NH₄)₂WO₄. For this reason, CO₂ is introduced into the enclosed leaching system to quickly neutralize NH₄OH in the solution, such that reaction (1) is suppressed; and by adding seed crystal of CaCO₃ simultaneously, the newly generated CaCO₃ grows up rapidly on the surface of the seed crystal, its reactivity is reduced, and occurrence of reaction (1) is further suppressed. As a result, it can be expected to simultaneously obtain a solution of (NH₄)₂WO₄ with a high concentration, as well as a high leaching rate for tungsten.

Additionally, by introducing CO₂ into the enclosed system, the utilization of CO₂ can be increased.

According to examples of the present invention, the crude solution of ammonium tungstate is purified for impurity removal; the method of purification for impurity removal is not particularly limited, as long as the contents of P, As, Si, Mo, S, Sn, Sb, Ca, Mg, K, Na, and other impurities in the purified solution can meet the quality requirements for preparing accepted APT product. According to one example of the present invention, a precipitation method can be used to remove impurities in the ammonium tungstate solution, thereby producing a refined solution of ammonium tungstate.

According to examples of the present invention, APT can be prepared by the method of evaporative crystallization of the refined solution of ammonium tungstate, conditions for the evaporative crystallization are not particularly limited. According to one example of the present invention, the ammonium tungstate solution is evaporated to a pH of 6.5 at 95°C, and after solid-liquid separation and product washing, an APT product is obtained with a purity conforming to the grade 0 standards of GB/T 10116-2007.
Example 1: In accordance with a molecular ratio of CaO/WO₃ being 3.3, a scheelite (mass percentage of WO₃ was 49.53%, and mass percentage of Fe was 0.43%) was finely ground with a clinker leached slag (the main component was CaCO₃) and a mineralization agent, i.e., calcium fluoride, and then mixed uniformly to obtain a crude material, calcium fluoride was added in an amount that was 5.2% (mass percentage) of the amount of dry tungsten ore raw material, particle size of the crude material was ≤40µm; and then, in a calcinating furnace, calcination was carried out at 800°C under an air atmosphere for 2.0h to obtain a clinker. After the clinker was cooled to room temperature, it was finely ground with a vibration ore mill, particle size of the clinker was ≤45µm; a 5.0g finely ground clinker was weighed and added to a reaction vessel equipped with aeration and mechanical stirring means, a 50mL ammonium carbonate solution of 50g-(NH₄)₂CO₃/100g-H₂O was added simultaneously and it was enclosed; after that, a CO₂ gas was introduced to control the absolute pressure of the reaction system at 2atm, and reaction was carried out at 80°C for 5h. After completion of the reaction, the leached ore slurry was subjected to vacuum suction filtration, and the filter cake was washed with purified water three times. Leaching rate of tungsten in the clinker was 97.15%.
Example 2: In accordance with a molecular ratio of (CaO+FeO)/WO₃ being 4.5, a mixed ore of wolframite-scheelite (mass percentage of WO₃ was 63.75%, and mass percentage of Fe was 5.90%) was finely ground with a clinker leached slag, and then mixed uniformly to obtain a crude material, particle size of the crude material was ≤45µm; and then, in a shaft furnace, calcination was carried out at 950°C under a weak reducing atmosphere for 3.0h to obtain a clinker. After the clinker was cooled to room temperature, it was finely ground with a ball mill, particle size of the clinker was ≤45µm; a 20.0g clinker was weighed and added to a reaction vessel equipped with aeration and mechanical stirring means, a 100mL ammonium carbonate solution of 35g-(NH₄)₂CO₃/100g-H₂O was added simultaneously and it was enclosed; after that, a CO₂ gas was introduced to control the absolute pressure of the reaction system at 2atm, and reaction was carried out at 70°C for 4h. After completion of the reaction, the leached ore slurry was subjected to vacuum suction filtration, and the filter cake was washed with purified water three times. Leaching rate of tungsten in the clinker was 87.17%.
Example 3: In accordance with a molecular ratio of (CaO+FeO+MnO)/WO₃ being 3.4, a wolframite (mass percentage of WO₃ was 62.40%, mass percentage of Fe was 14.08%, and mass percentage of Mn was 2.25%) was finely ground with a clinker leached slag and calcium fluoride, and then mixed uniformly to obtain a crude material, calcium fluoride was added in an amount that was 7% (mass percentage) of the amount of dry tungsten ore raw material, particle size of the crude material was ≤40µm; and then, in a tubular calcinating furnace, calcination was carried out at 800°C under a neutral atmosphere for 6.0h to obtain a clinker. After the clinker was cooled to room temperature, it was finely ground with a rod mill, particle size of the clinker was ≤45µm; a ball-milling leacher was chosed as the leaching equipment, internally charged with a saturated solution of ammonium carbonate, and ammonium bicarbonate was added thereto by 1.0 times the theoretical amount; the clinker was feed into the leaching equipment and reacted at 80°C for 4h. After completion of the reaction, the leached ore slurry was subjected to vacuum suction filtration, and the filter cake was washed with purified water three times. Leaching rate of tungsten was 97.13%. After that, the crude solution of ammonium tungstate was purified for impurity removal, and the purified solution was subjected to evaporative crystallization to liberate APT while obtaining ammonia gas and carbon dioxide gas, and the slurry after crystallization was subjected to liquid-solid separation to obtain a crystallization mother liquor and a solid phase; the solid phase was washed with water to obtain a APT product, and the APT product met the state standards for grade 0 products; the ammonia gas and carbon dioxide obtained were returned together to the leaching equipment for circulatory leaching the clinker after supplementing the loss of ammonium carbonate.
Example 4: In accordance with a molecular ratio of (CaO+FeO)/WO₃ being 3.0, a wolframite (mass percentage of WO₃ was 42.17%, and mass percentage of Fe was 11.34%) was finely ground with a clinker leached slag and calcium fluoride, and then mixed uniformly to obtain a crude material, calcium fluoride was added in an amount that was 1.5% (mass percentage) of the amount of dry tungsten ore raw material, particle size of the crude material was ≤45µm; and then, in a calcinating furnace, calcination was carried out at 850°C under a weak reducing atmosphere for 5.0h to obtain a clinker. After the clinker was cooled to room temperature, it was finely ground with a stirring mill, particle size of the clinker was ≤45µm; a ball-milling digester was chosed as the leaching equipment, internally charged with a saturated solution of ammonium carbonate, and ammonium bicarbonate was added thereto by 1.1 times the theoretical amount; the clinker was feed into the leaching equipment and reacted at 40°C for 4h. After completion of the reaction, the leached ore slurry was subjected to vacuum suction filtration, and the filter cake was washed with purified water three times. Leaching rate of tungsten was 97.78%. After that, the procedures were similar to Example 3, but with supplemented ammonium bicarbonate and aqua ammonia.
Example 5: In accordance with a molecular ratio of CaO/WO₃ being 6.0, a scheelite (mass percentage of WO₃ was 49.53%, and mass percentage of Fe was 0.43%) was finely ground with a clinker leached slag and calcium fluoride, and then mixed uniformly to obtain a crude material, calcium fluoride was added in an amount that was 3% (mass percentage) of the amount of dry tungsten ore raw material, particle size of the crude material was ≤45µm; and then, in a calcinating furnace, calcination was carried out at 870°C under a neutral atmosphere for 4h to obtain a clinker. After the clinker was cooled to room temperature, it was finely ground with a twin-roller machine, particle size of the clinker was ≤45µm; a leaching tank with stirring was chosed as the leaching equipment, internally charged with a saturated solution of ammonium carbonate, and ammonium bicarbonate was added thereto by 1.3 times the theoretical amount; the clinker was feed into the leaching equipment, aqua ammonia was added simultaneously (such that the mass percentage of NH₃ in the leaching solution was 5%) and enclosed, then carbon dioxide gas was introduce to control the absolute pressure of the leaching system at 2atm, and reaction was carried out at 30°C for 5h. After completion of the reaction, the ore slurry was leached, and the filter cake was washed with purified water three times. Leaching rate of tungsten was 98.51%. After that, the procedures were similar to Example 3, but with supplemented aqua ammonia and CO₂.
Example 6: In accordance with a molecular ratio of (CaO+FeO)/WO₃ being 7, a scheelite (mass percentage of WO₃ was 52.33%, and mass percentage of Fe was 2.04%) was finely ground with a clinker leached slag, and then mixed uniformly to obtain a crude material, particle size of the crude material was ≤45µm; and then, in a calcinating furnace, calcination was carried out at 1000°C under a neutral atmosphere for 7h to obtain a clinker. After the clinker was cooled to room temperature, it was finely ground with a centrifugal mill, particle size of the clinker was ≤45µm; a ball-milling leacher was chosed as the leaching equipment, internally charged with an ammonium carbonate solution, the concentration of ammonium carbonate was 35g-(NH₄)₂CO₃ /100g-H₂O, and ammonium bicarbonate was added thereto by 1.3 times the theoretical amount; the clinker was feed into the leaching equipment and reacted at 40°C for 9h. After completion of the reaction, the leached ore slurry was subjected to suction filtration, and the filter cake was washed with purified water three times. Leaching rate of tungsten was 98.99%. After that, the procedures were similar to Example 3, and the APT product met the state standards for grade 0 products.
Example 7: In accordance with a molecular ratio of CaO/WO₃ being 7, a scheelite (mass percentage of WO₃ was 49.53%, and mass percentage of Fe was 0.43%) was finely ground with a clinker leached slag, and then mixed uniformly to obtain a crude material, particle size of the crude material was ≤40µm; and then, in a calcinating furnace, calcination was carried out at 950°C under a neutral atmosphere for 5h to obtain a clinker. After the clinker was cooled to room temperature, it was finely ground with a planetary mill, particle size of the clinker was ≤45µm; a leaching tank with stirring was chosed as the leaching equipment, internally charged with a mixed solution of saturated ammonium carbonate and ammonium tungstate containing 20g/LWO₃, and ammonium bicarbonate was added thereto by 1.4 times the theoretical amount; the clinker was feed into the leaching equipment, aqua ammonia was added simultaneously (such that the mass percentage of NH₃ in the leaching solution was 9.5%) and enclosed, then carbon dioxide gas was introduce to control the absolute pressure of the leaching system at 3atm, and reaction was carried out at 20°C for 6h. After completion of the reaction, the leached ore slurry was subjected to suction filtration, and the filter cake was washed with purified water three times. Leaching rate of tungsten was 99.01%. After that, the procedures were similar to Example 3, but with supplemented aqua ammonia and CO₂.
Example 8: In accordance with a molecular ratio of CaO/WO₃ being 8, a tungsten slime (mass percentage of WO₃ was 16.22%) was finely ground with a clinker leached slag, and then mixed uniformly to obtain a crude material, particle size of the crude material was ≤40µm; and then, in a calcinating furnace, calcination was carried out at 940°C under a reducing atmosphere for 3h to obtain a clinker, and the clinker was cooled to room temperature; a leaching tank with stirring was chosed as the leaching equipment, internally charged with a mixed solution of saturated ammonium carbonate and ammonium tungstate containing 120g/L WO₃, and ammonium bicarbonate was added thereto by 1.4 times the theoretical amount; the clinker was feed into the leaching equipment, aqua ammonia was added simultaneously (such that the mass percentage of NH₃ in the leaching solution was 10%) and enclosed, reaction was carried out at 30°C for 4h. After completion of the reaction, the ore slurry was leached, and the filter cake was washed with purified water three times. Leaching rate of tungsten was 97.51%. After that, the procedures were similar to Example 3, but with supplemented aqua ammonia and CO₂.
Example 9: In accordance with a molecular ratio of (CaO+FeO)/WO₃ being 1.5, a scheelite (mass percentage of WO₃ was 52.33%, and mass percentage of Fe was 2.04%) was finely ground with a clinker leached slag, and then mixed uniformly to obtain a crude material, particle size of the crude material was ≤45µm; and then, in a calcinating furnace, calcination was carried out at 965°C under a neutral atmosphere for 1.5h to obtain a clinker. After the clinker was cooled to room temperature, it was finely ground with a twin-roller machine, particle size of the clinker was ≤45µm; a ball-milling leacher was chosed as the leaching equipment, internally charged with an ammonium carbonate solution, the concentration of ammonium carbonate was 67g-(NH₄)₂CO₃ /100g-H₂O, and ammonium bicarbonate was added thereto by 1.4 times the theoretical amount; the clinker was feed into the leaching equipment and reacted at 18°C for 6.5h. After completion of the reaction, the leached ore slurry was subjected to suction filtration, and the filter cake was washed with purified water three times. Leaching rate of tungsten was 29.30%.
Example 10: In accordance with a molecular ratio of (CaO+FeO)/WO₃ being 1.2, a mixed ore of wolframite-scheelite (mass percentage of WO₃ was 43.20%, and mass percentage of Fe was 7.18%) was finely ground with a clinker leached slag, and then mixed uniformly to obtain a crude material, particle size of the crude material was ≤45µm; and then, in a calcinating furnace, calcination was carried out at 500°C under a neutral atmosphere for 3h to obtain a clinker. After the clinker was cooled to room temperature, it was finely ground with a vibration mill, particle size of the clinker was ≤45µm; a ball-milling leacher was chosed as the leaching equipment, internally charged with an ammonium carbonate solution, the concentration of ammonium carbonate was 50g-(NH₄)₂CO₃/100g-H₂O, and ammonium bicarbonate was added thereto by 1.25 times the theoretical amount; the clinker was feed into the leaching equipment and reacted at 28°C for 3.5h. After completion of the reaction, the leached ore slurry was subjected to suction filtration, and the filter cake was washed with purified water three times. Leaching rate of tungsten was 9.76%.
Example 11: In accordance with a molecular ratio of CaO/WO₃ being 9, a scheelite (mass percentage of WO₃ was 49.53%, and mass percentage of Fe was 0.43%) was finely ground with a clinker leached slag, and then mixed uniformly to obtain a crude material, particle size of the crude material was ≤200µm; and then, in a calcinating furnace, calcination was carried out at 950°C under a neutral atmosphere for 4h to obtain a clinker. After the clinker was cooled to room temperature, it was finely ground with a vibration mill, particle size of the clinker was ≤40≤m; a leaching tank with stirring was chosed as the leaching equipment, internally charged with a saturated solution of ammonium carbonate, and ammonium bicarbonate was added thereto by 1.1 times the theoretical amount; the clinker was feed into the leaching equipment, aqua ammonia was added simultaneously (such that the mass percentage of NH₃ in the leaching solution was 10%) and enclosed, reaction was carried out at 27°C for 4.5h. After completion of the reaction, the leached ore slurry was subjected to pressure filtration, and the filter cake was washed with purified water three times. Leaching rate of tungsten was 89.05%. After that, the procedures were similar to Example 3, but with supplemented aqua ammonia and CO₂.
Example 12: In accordance with a molecular ratio of CaO/WO₃ being 2.3, a scheelite (mass percentage of WO₃ was 49.53%, and mass percentage of Fe was 0.43%) was finely ground with a clinker leached slag, and then mixed uniformly to obtain a crude material, calcium fluoride was added in an amount that was 1% (mass percentage) of the amount of dry tungsten ore raw material, particle size of the crude material was ≤100µm; and then, in a calcinating furnace, calcination was carried out at 845°C under a neutral atmosphere for 2.5h to obtain a clinker. After the clinker was cooled to room temperature, it was finely ground with a ball mill, particle size of the clinker was ≤45µm; a leaching tank with stirring was chosed as the leaching equipment, internally charged with a saturated solution of ammonium carbonate, and ammonium bicarbonate was added thereto by 1.2 times the theoretical amount; the clinker was feed into the leaching equipment, aqua ammonia was added simultaneously (such that the mass percentage of NH₃ in the leaching solution was 5.9%) and enclosed, then carbon dioxide gas was introduce to control the absolute pressure of the leaching system at 2.5atm, and reaction was carried out at 27°C for 4.5h. After completion of the reaction, the leached ore slurry was subjected to suction filtration, and the filter cake was washed with purified water three times. Leaching rate of tungsten was 73.65%. After that, the procedures were similar to Example 3, but with supplemented aqua ammonia and ammonium bicarbonate.
Example 13: In accordance with a molecular ratio of CaO/WO₃ being 3.6, a scheelite (mass percentage of WO₃ was 49.53%, and mass percentage of Fe was 0.43%) was finely ground with a clinker leached slag, and then mixed uniformly to obtain a crude material, particle size of the crude material was ≤45µm; and then, in a calcinating furnace, calcination was carried out at 870°C under a neutral atmosphere for 1h to obtain a clinker. After the clinker was cooled to room temperature, it was finely ground with an airflow crusher, particle size of the clinker was ≤74µm; a leaching tank with stirring was chosed as the leaching equipment, internally charged with a saturated solution of ammonium carbonate, and ammonium bicarbonate was added thereto by 1.4 times the theoretical amount;the clinker was feed into the leaching equipment, aqua ammonia was added simultaneously(such that the mass percentage of NH₃ in the leaching solution was 20%) and enclosed, reaction was carried out at 32°C for 3.8h. After completion of the reaction, the leached ore slurry was subjected to suction filtration, and the filter cake was washed with purified water three times. Leaching rate of tungsten was 96.15%. After that, the procedures were similar to Example 3, but with supplemented ammonium bicarbonate.
Example 14: In accordance with a molecular ratio of (CaO+FeO)/WO₃ being 4.5, a scheelite (mass percentage of WO₃ was 52.33%, and mass percentage of Fe was 2.04%) was finely ground with a clinker leached slag, and then mixed uniformly to obtain a crude material, calcium fluoride was added in an amount that was 0.5% (mass percentage) of the amount of dry tungsten ore raw material, particle size of the crude material was ≤50µm; and then, in a calcinating furnace, calcination was carried out at 920°C under a neutral atmosphere for 2h to obtain a clinker. After the clinker was cooled to room temperature, it was finely ground with a stirring mill, particle size of the clinker was ≤45µm; a stirring leacher was chosed as the leaching equipment, internally charged with a saturated solution of ammonium carbonate, and ammonium bicarbonate was added thereto by 1.2 times the theoretical amount; the clinker was feed into the leaching equipment and reacted at 38°C for 2h. After completion of the reaction, the leached ore slurry was subjected to suction filtration, and the filter cake was washed with purified water 2 times. Leaching rate of tungsten was 98.22%. After that, the procedures were similar to Example 3, and the APT product met the state standards for grade 0 products.
Example 15: In accordance with a molecular ratio of (CaO+FeO)/WO₃ being 3.4, a scheelite (mass percentage of WO₃ was 52.33%, and mass percentage of Fe was 2.04%) was finely ground with a clinker leached slag, and then mixed uniformly to obtain a crude material, particle size of the crude material was ≤45µm; and then, in a calcinating furnace, calcination was carried out at 960°C under a neutral atmosphere for 2h to obtain a clinker. After the clinker was cooled to room temperature, it was finely ground with a rod mill, particle size of the clinker was ≤200µm; a ball-milling leacher was chosed as the leaching equipment, internally charged with a saturated solution of ammonium carbonate, and ammonium bicarbonate was added thereto by 1.2 times the theoretical amount; the clinker was feed into the leaching equipment and reacted at 38°C for 5h. After completion of the reaction, the leached ore slurry was subjected to suction filtration, and the filter cake was washed with purified water 2 times. Leaching rate of tungsten was 98.35%. After that, the procedures were similar to Example 3, and the APT product met the state standards for grade 0 products.
Example 16: In accordance with a molecular ratio of (CaO+FeO)/WO₃ being 4.1, a scheelite (mass percentage of WO₃ was 52.33%, and mass percentage of Fe was 2.04%) was finely ground with a clinker leached slag, and then mixed uniformly to obtain a crude material, particle size of the crude material was <61µm; and then, in a calcinating furnace, calcination was carried out at 970°C under an oxidizing atmosphere for 2h to obtain a clinker. After the clinker was cooled to room temperature, it was finely ground with a ball mill, particle size of the clinker was ≤74µm; a ball-milling leacher was chosed as the leaching equipment, internally charged with a saturated solution of ammonium carbonate, and ammonium bicarbonate was added thereto by 1.4 times the theoretical amount; the clinker was feed into the leaching equipment and reacted at 55°C for 4h. After completion of the reaction, the leached ore slurry was subjected to suction filtration, and the filter cake was washed with purified water 2 times. Leaching rate of tungsten was 97.31 %. After that, the procedures were similar to Example 3, and the APT product met the state standards for grade 0 products.
Example 17: In accordance with a molecular ratio of CaO/WO₃ being 6.5, a scheelite (mass percentage of WO₃ was 52.33%, and mass percentage of Fe was 2.04%) was finely ground with a clinker leached slag, and then mixed uniformly to obtain a crude material, particle size of the crude material was ≤53µm; and then, in a calcinating furnace, calcination was carried out at 990°C under a neutral atmosphere for 0.5h to obtain a clinker. After the clinker was cooled to room temperature, it was finely ground with a planetary mill, particle size of the clinker was ≤45µm; a stirring leacher was chosed as the leaching equipment, internally charged with a saturated solution of ammonium carbonate, and ammonium bicarbonate was added thereto by 1.5 times the theoretical amount; the clinker was feed into the leaching equipment and reacted at 62°C for 2h. After completion of the reaction, the leached ore slurry was subjected to suction filtration, and the filter cake was washed with purified water 5 times. Leaching rate of tungsten was 96.78%. After that, the procedures were similar to Example 3, but with supplemented ammonium carbonate and aqua ammonia, and the APT product met the state standards for grade 0 products.
Example 18: In accordance with a molecular ratio of (CaO+FeO)/WO₃ being 4.7, a scheelite (mass percentage of WO₃ was 52.33%, and mass percentage of Fe was 2.04%) was finely ground with a clinker leached slag, and then mixed uniformly to obtain a crude material, particle size of the crude material was ≤74µm; and then, in a calcinating furnace, calcination was carried out at 980°C under a neutral atmosphere for 2h to obtain a clinker. After the clinker was cooled to room temperature, it was finely ground with a high-pressure disc mill, particle size of the clinker was ≤45µm; a stirring leacher was chosed as the leaching equipment, internally charged with a saturated solution of ammonium carbonate, and ammonium bicarbonate was added thereto by 1.6 times the theoretical amount; the clinker was feed into the leaching equipment and reacted at 75°C for 3.5h. After completion of the reaction, the leached ore slurry was subjected to suction filtration, and the filter cake was washed with purified water 2 times. Leaching rate of tungsten was 97.01%. After that, the procedures were similar to Example 3, and the APT product met the state standards for grade 0 products.
Example 19: In accordance with a molecular ratio of CaO/WO₃ being 3.8, a scheelite (mass percentage of WO₃ was 49.53%, and mass percentage of Fe was 0.43%) was finely ground with a clinker leached slag, and then mixed uniformly to obtain a crude material, calcium fluoride was added in an amount that was 0.5% (mass percentage) of the amount of dry tungsten ore raw material, particle size of the crude material was ≤40µm; and then, in a calcinating furnace, calcination was carried out at 880°C under a neutral atmosphere for 1h to obtain a clinker. After the clinker was cooled to room temperature, it was finely ground with a ball mill, particle size of the clinker was ≤45µm; a leaching tank with stirring was chosed as the leaching equipment, internally charged with a saturated solution of ammonium carbonate, and ammonium bicarbonate was added thereto by 1.4 times the theoretical amount;the clinker was feed into the leaching equipment, aqua ammonia was added simultaneously (such that the mass percentage of NH₃ in the leaching solution was 8.2%) and enclosed, then carbon dioxide gas was introduce to control the absolute pressure of the leaching system at 3atm, and reaction was carried out at 32°C for 3.8h. After completion of the reaction, the leached ore slurry was subjected to suction filtration, and the filter cake was washed with purified water three times. Leaching rate of tungsten was 98.15%. After that, the procedures were similar to Example 3, but with supplemented aqua ammonia and CO₂.
Example 20: In accordance with a molecular ratio of CaO/WO₃ being 3.8, a scheelite (mass percentage of WO₃ was 49.53%, and mass percentage of Fe was 0.43%) was finely ground with a clinker leached slag, and then mixed uniformly to obtain a crude material, calcium fluoride was added in an amount that was 5% (mass percentage) of the amount of dry tungsten ore raw material, particle size of the crude material was ≤30µm; and then, in a calcinating furnace, calcination was carried out at 860°C under a neutral atmosphere for 1h to obtain a clinker. After the clinker was cooled to room temperature, it was finely ground with a tower mill, particle size of the clinker was ≤45µm; a leaching tank with stirring was chosed as the leaching equipment, internally charged with a mixed solution of saturated ammonium carbonate and ammonium tungstate containing 60g/L WO₃; the clinker was feed into the leaching equipment, aqua ammonia was added simultaneously (such that the mass percentage of NH₃ in the leaching solution was 15%) and enclosed, then carbon dioxide gas was introduce to control the absolute pressure of the leaching system at 1.2atm, and reaction was carried out at 35°C for 6h. After completion of the reaction, the leached ore slurry was subjected to pressure filtration, and the filter cake was washed with purified water three times. Leaching rate of tungsten was 98.03%. After that, the procedures were similar to Example 3, but with supplemented aqua ammonia, CO₂ and ammonium carbonate.
Example 21: In accordance with a molecular ratio of CaO/WO₃ being 2.0, a scheelite (mass percentage of WO₃ was 49.53%, and mass percentage of Fe was 0.43%) was finely ground with a clinker leached slag, and then mixed uniformly to obtain a crude material, particle size of the crude material was ≤36µm; and then, in a calcinating furnace, calcination was carried out at 880°C under a reducing atmosphere for 1h to obtain a clinker. After the clinker was cooled to room temperature, it was finely ground with a vibration mill, particle size of the clinker was ≤45µm; a leaching tank with stirring was chosed as the leaching equipment, internally charged with a saturated solution of ammonium carbonate, and ammonium bicarbonate was added thereto by 1.4 times the theoretical amount;the clinker was feed into the leaching equipment, aqua ammonia was added simultaneously (such that the mass percentage of NH₃ in the leaching solution was 10.0%) and enclosed, then carbon dioxide gas was introduce to control the absolute pressure of the leaching system at 1.5atm, and reaction was carried out at 32°C for 3.8h. After completion of the reaction, the leached ore slurry was subjected to suction filtration, and the filter cake was washed with purified water three times. Leaching rate of tungsten was 42.75%. After that, the procedures were similar to Example 3, but with supplemented ammonium bicarbonate, aqua ammonia and CO₂.
Example 22: In accordance with a molecular ratio of CaO/WO₃ being 1.8, a scheelite (mass percentage of WO₃ was 49.53%, and mass percentage of Fe was 0.43%) was finely ground with a clinker leached slag, and then mixed uniformly to obtain a crude material, particle size of the crude material was ≤45µm; and then, in a calcinating furnace, calcination was carried out at 880°C under a neutral atmosphere for 1h to obtain a clinker. After the clinker was cooled to room temperature, it was finely ground with a ball mill, particle size of the clinker was ≤45µm; a leaching tank with stirring was chosed as the leaching equipment, internally charged with a saturated solution of ammonium carbonate, and ammonium bicarbonate was added thereto by 1.4 times the theoretical amount;the clinker was feed into the leaching equipment, aqua ammonia was added simultaneously (such that the mass percentage of NH3 in the leaching solution was 7.4%) and enclosed, then carbon dioxide gas was introduce to control the absolute pressure of the leaching system at 1.9atm, and reaction was carried out at 32°C for 3.8h. After completion of the reaction, the leached ore slurry was subjected to suction filtration, and the filter cake was washed with purified water three times. Leaching rate of tungsten was 38.35%. After that, the procedures were similar to Example 3, but with supplemented aqua ammonia and CO₂.
Example 23: In accordance with a molecular ratio of (CaO+FeO)/WO₃ being 1.5, a scheelite (mass percentage of WO₃ was % 52.33, and mass percentage of Fe was 2.04%) was finely ground with a clinker leached slag, and then mixed uniformly to obtain a crude material, particle size of the crude material was ≤33µm; and then, in a calcinating furnace, calcination was carried out at 965°C under a neutral atmosphere for 5h to obtain a clinker. After the clinker was cooled to room temperature, it was finely ground with a vibration mill, particle size of the clinker was ≤74µm; a ball-milling leacher was chosed as the leaching equipment, internally charged with an ammonium carbonate solution, the concentration of ammonium carbonate was 80g-(NH₄)₂CO₃/100g-H₂O, and ammonium bicarbonate was added thereto by 1.4 times the theoretical amount; the clinker was feed into the leaching equipment and reacted at 20°C for 6.5h. After completion of the reaction, the leached ore slurry was subjected to suction filtration, and the filter cake was washed with purified water three times. Leaching rate of tungsten was 22.96%. After that, the procedures were similar to Example 3.
Example 24: In accordance with a molecular ratio of (CaO+FeO)/WO₃ being 2.9, a mixed ore of wolframite-scheelite (mass percentage of WO₃ was 43.20%, and mass percentage of Fe was 7.18%) was finely ground with a clinker leached slag, and then mixed uniformly to obtain a crude material, calcium fluoride was added in an amount that was 2% (mass percentage) of the amount of dry tungsten ore raw material, particle size of the crude material was ≤30µm; and then, in a calcinating furnace, calcination was carried out at 850°C under a neutral atmosphere for 3h to obtain a clinker. After the clinker was cooled to room temperature, it was finely ground with a twin-roller machine, particle size of the clinker was ≤74µm; a ball-milling leacher was chosed as the leaching equipment, internally charged with an ammonium carbonate solution, the concentration of ammonium carbonate was 80g-(NH₄)₂CO₃/100g-H₂O, and ammonium bicarbonate was added thereto by 1.25 times the theoretical amount; the clinker was feed into the leaching equipment and reacted at 28°C for 4h. After completion of the reaction, the leached ore slurry was subjected to suction filtration, and the filter cake was washed with purified water three times. Leaching rate of tungsten was 95.71%. After that, the procedures were similar to Example 3, but with supplemented ammonium carbonate, ammonium bicarbonate and aqua ammonia.
Example 25: In accordance with a molecular ratio of CaO/WO₃ being 4, a scheelite (mass percentage of WO₃ was 49.53%, and mass percentage of Fe was 0.43%) was finely ground with a clinker leached slag, and then mixed uniformly to obtain a crude material, particle size of the crude material was ≤28µm; and then, in a calcinating furnace, calcination was carried out at 950°C under an oxidizing atmosphere for 4h to obtain a clinker. After the clinker was cooled to room temperature, it was finely ground with a ball mill, particle size of the clinker was ≤45µm; a leaching tank with stirring was chosed as the leaching equipment, internally charged with a saturated solution of ammonium carbonate; the clinker was feed into the leaching equipment, aqua ammonia was added simultaneously (such that the mass percentage of NH₃ in the leaching solution was 20%) and enclosed, reaction was carried out at 27°C for 4.5h. After completion of the reaction, the leached ore slurry was subjected to suction filtration, and the filter cake was washed with purified water three times. Leaching rate of tungsten was 98.35%. After that, the procedures were similar to Example 3, but with supplemented aqua ammonia.
Example 26: In accordance with a molecular ratio of CaO/WO₃ being 2.3, a scheelite (mass percentage of WO₃ was 49.53%, and mass percentage of Fe was 0.43%) was finely ground with a clinker leached slag, and then mixed uniformly to obtain a crude material, calcium fluoride was added in an amount that was 4.5% (mass percentage) of the amount of dry tungsten ore raw material, particle size of the crude material was ≤41µm; and then, in a calcinating furnace, calcination was carried out at 845°C under a neutral atmosphere for 2.5h to obtain a clinker. After the clinker was cooled to room temperature, it was finely ground with a ball mill, particle size of the clinker was ≤83µm; a ball-milling leacher was chosed as the leaching equipment, internally charged with a saturated solution of ammonium carbonate, and ammonium bicarbonate was added thereto by 1.2 times the theoretical amount; the clinker was feed into the leaching equipment, aqua ammonia was added simultaneously (such that the mass percentage of NH3 in the leaching solution was 9.8%) and enclosed, and reaction was carried out at 37°C for 4.5h. After completion of the reaction, the leached ore slurry was subjected to suction filtration, and the filter cake was washed with purified water three times. Leaching rate of tungsten was 68.65%. After that, the procedures were similar to Example 3, but with supplemented ammonium carbonate, aqua ammonia and CO₂.
Example 27: In accordance with a molecular ratio of (CaO+FeO)/WO₃ being 4.8, a scheelite (mass percentage of WO₃ was 52.27%, and mass percentage of Fe was 5.86%) was finely ground with a clinker leached slag, and then mixed uniformly to obtain a crude material, calcium fluoride was added in an amount that was 2.5% (mass percentage) of the amount of dry tungsten ore raw material, particle size of the crude material was ≤61µm; and then, in a calcinating furnace, calcination was carried out at 870°C under a neutral atmosphere for 1h to obtain a clinker. After the clinker was cooled to room temperature, it was finely ground with a rod mill, particle size of the clinker was ≤45µm; a leaching tank with stirring was chosed as the leaching equipment, internally charged with a saturated solution of ammonium carbonate, and ammonium bicarbonate was added thereto by 1.4 times the theoretical amount; the clinker was feed into the leaching equipment and reacted at 32°C for 8.0h. After completion of the reaction, the leached ore slurry was subjected to suction filtration, and the filter cake was washed with purified water three times. Leaching rate of tungsten was 97.10%. After that, the procedures were similar to Example 3, but with supplemented aqua ammonia and CO₂.
Example 28: In accordance with a molecular ratio of (CaO+FeO+MnO)/WO₃ being 4.5, a scheelite (mass percentage of WO₃ was 52.33%, and mass percentage of Fe was 2.04%) was finely ground with a rhodochrosite and a limestone, and then mixed uniformly to obtain a crude material, particle size of the crude material was ≤14µm; and then, in a calcinating furnace, calcination was carried out at 920°C under a neutral atmosphere for 2h to obtain a clinker. After the clinker was cooled to room temperature, it was finely ground with a vibration mill, particle size of the clinker was ≤45µm; a ball-milling leacher was chosed as the leaching equipment, internally charged with a saturated solution of ammonium carbonate, and ammonium bicarbonate was added thereto by 1.2 times the theoretical amount; the clinker was feed into the leaching equipment and reacted at 43°C for 5h. After completion of the reaction, the leached ore slurry was subjected to suction filtration, and the filter cake was washed with purified water 2 times. Leaching rate of tungsten was 98.42%. After that, the procedures were similar to Example 3, and the APT product met the state standards for grade 0 products.
Example 29: In accordance with a molecular ratio of (CaO+FeO)/WO₃ being 4.9, a scheelite (mass percentage of WO₃ was 52.33%, and mass percentage of Fe was 2.04%) was finely ground with a clinker leached slag, and then mixed uniformly to obtain a crude material, particle size of the crude material was ≤42µm; and then, in a calcinating furnace, calcination was carried out at 960°C under a neutral atmosphere for 2h to obtain a clinker. After the clinker was cooled to room temperature, it was finely ground with a planetary mill, particle size of the clinker was ≤45µm; a stirring leacher was chosed as the leaching equipment, internally charged with a saturated solution of ammonium carbonate, and ammonium bicarbonate was added thereto by 1.2 times the theoretical amount; the clinker was feed into the leaching equipment and reacted at 38°C for 5h. After completion of the reaction, the leached ore slurry was subjected to suction filtration, and the filter cake was washed with purified water 2 times. Leaching rate of tungsten was 97.35%. After that, the procedures were similar to Example 3, and the APT product met the state standards for grade 0 products.
Example 30: In accordance with a molecular ratio of (CaO+MnO)/WO₃ being 4.6, a scheelite (mass percentage of WO₃ was 60.94%) was finely ground with a rhodochrosite and a clinker leached slag, and then mixed uniformly to obtain a crude material, particle size of the crude material was ≤44µm; and then, in a calcinating furnace, calcination was carried out at 980°C under a neutral atmosphere for 1.5h to obtain a clinker. After the clinker was cooled to room temperature, it was finely ground with a stirring mill, particle size of the clinker was ≤45µm; a stirring leacher was chosed as the leaching equipment, internally charged with a saturated solution of ammonium carbonate, and ammonium bicarbonate was added thereto by 1.5 times the theoretical amount; the clinker was feed into the leaching equipment and reacted at 50°C for 4h. After completion of the reaction, the leached ore slurry was subjected to suction filtration, and the filter cake was washed with purified water 4 times. Leaching rate of tungsten was 97.99%. After that, the procedures were similar to Example 3, and the APT product met the state standards for grade 0 products.
Example 31: In accordance with a molecular ratio of CaO/WO₃ being 4.3, a scheelite (mass percentage of WO₃ was 60.94%) was finely ground with a clinker leached slag, and then mixed uniformly to obtain a crude material, particle size of the crude material was ≤48µm; and then, in a calcinating furnace, calcination was carried out at 970°C under a neutral atmosphere for 2h to obtain a clinker. After the clinker was cooled to room temperature, it was finely ground with a rod mill, particle size of the clinker was ≤45µm; a stirring leacher was chosed as the leaching equipment, internally charged with a saturated solution of ammonium carbonate, and ammonium bicarbonate was added thereto by 1.2 times the theoretical amount; the clinker was feed into the leaching equipment and reacted at 55°C for 4h. After completion of the reaction, the leached ore slurry was subjected to suction filtration, and the filter cake was washed with purified water. Leaching rate of tungsten was 97.74%. After that, the procedures were similar to Example 3, and the APT product met the state standards for grade 0 products.
Example 32: In accordance with a molecular ratio of (CaO+FeO)/WO₃ being 4.9, a scheelite (mass percentage of WO₃ was 52.33%, and mass percentage of Fe was 2.04%) was finely ground with a clinker leached slag, and then mixed uniformly to obtain a crude material, particle size of the crude material was ≤38µm; and then, in a calcinating furnace, calcination was carried out at 990°C under an oxidizing atmosphere for 1h to obtain a clinker. After the clinker was cooled to room temperature, it was finely ground with a ball mill, particle size of the clinker was ≤45µm; a stirring leacher was chosed as the leaching equipment, internally charged with a saturated solution of ammonium carbonate, and ammonium bicarbonate was added thereto by 1.5 times the theoretical amount; the clinker was feed into the leaching equipment and reacted at 62°C for 4h. After completion of the reaction, the leached ore slurry was subjected to suction filtration, and the filter cake was washed with purified water 5 times. Leaching rate of tungsten was 97.78%. After that, the procedures were similar to Example 3, and the APT product met the state standards for grade 0 products.
Example 33: In accordance with a molecular ratio of CaO/WO₃ being 5.1, a scheelite (mass percentage of WO₃ was 60.94%) was finely ground with a clinker leached slag, and then mixed uniformly to obtain a crude material, particle size of the crude material was ≤63µm; and then, in a calcinating furnace, calcination was carried out at 980°C under a neutral atmosphere for 2h to obtain a clinker. After the clinker was cooled to room temperature, it was finely ground with a stirring mill, particle size of the clinker was ≤45µm; a stirring leacher was chosed as the leaching equipment, internally charged with a saturated solution of ammonium carbonate, and ammonium bicarbonate was added thereto by 1.3 times the theoretical amount; the clinker was feed into the leaching equipment and reacted at 75°C for 0.5h. After completion of the reaction, the leached ore slurry was subjected to suction filtration, and the filter cake was washed with purified water 2 times. Leaching rate of tungsten was 97.51%. After that, the procedures were similar to Example 3, and the APT product met the state standards for grade 0 products.
Example 34: In accordance with a molecular ratio of (CaO+MnO)/WO₃ being 5.1, a scheelite (mass percentage of WO₃ was 49.53%, and mass percentage of Fe was 0.43%) was finely ground with a rhodochrosite and a clinker leached slag, and then mixed uniformly to obtain a crude material, calcium fluoride was added in an amount that was 6.0% (mass percentage) of the amount of dry tungsten ore raw material, particle size of the crude material was ≤36µm; and then, in a calcinating furnace, calcination was carried out at 880°C under a neutral atmosphere for 1h to obtain a clinker. After the clinker was cooled to room temperature, it was finely ground with a stirring mill, particle size of the clinker was ≤45µm; a leaching tank with stirring was chosed as the leaching equipment, internally charged with a saturated solution of ammonium carbonate, and ammonium bicarbonate was added thereto by 1.5 times the theoretical amount; the clinker was feed into the leaching equipment, aqua ammonia was added simultaneously (such that the mass percentage of NH₃ in the leaching solution was 5.0%) and enclosed, reaction was carried out at 32°C for 3.8h. After completion of the reaction, the leached ore slurry was subjected to pressure filtration, and the filter cake was washed with purified water three times. Leaching rate of tungsten was 98.15%. After that, the procedures were similar to Example 3, but with supplemented ammonium carbonate, ammonium bicarbonate, aqua ammonia and CO₂.
Example 35: In accordance with a molecular ratio of (CaO+MnO)/WO₃ being 5.1, a scheelite (mass percentage of WO₃ was 49.53%, and mass percentage of Fe was 0.43%) was finely ground with a rhodochrosite and a clinker leached slag, and then mixed uniformly to obtain a crude material, particle size of the crude material was ≤36µm; and then, in a calcinating furnace, calcination was carried out at 880°C under a neutral atmosphere for 1h to obtain a clinker. After the clinker was cooled to room temperature, it was finely ground with a stirring mill, particle size of the clinker was ≤45µm; a leaching tank with stirring was chosed as the leaching equipment, internally charged with a saturated solution of ammonium carbonate, and ammonium bicarbonate was added thereto by 1.5 times the theoretical amount;the clinker was feed into the leaching equipment, aqua ammonia was added simultaneously (such that the mass percentage of NH₃ in the leaching solution was 5.0%) and enclosed, reaction was carried out at 32°C for 3.8h. After completion of the reaction, the leached ore slurry was subjected to pressure filtration, and the filter cake was washed with purified water three times. Leaching rate of tungsten was 86.23%. After that, the procedures were similar to Example 3, but with supplemented ammonium carbonate, ammonium bicarbonate, aqua ammonia and CO₂.
Example 36: In accordance with a molecular ratio of CaO/WO₃ being 2.5, a scheelite (mass percentage of WO₃ was 49.53%, and mass percentage of Fe was 0.43%) was finely ground with a clinker leached slag, and then mixed uniformly to obtain a crude material, calcium fluoride was added in an amount that was 4.5% (mass percentage) of the amount of dry tungsten ore raw material, particle size of the crude material was ≤37µm; and then, in a calcinating furnace, calcination was carried out at 880°C under a reducing atmosphere for 1h to obtain a clinker. After the clinker was cooled to room temperature, it was finely ground with a vibration mill, particle size of the clinker was ≤53µm; a leaching tank with stirring was chosed as the leaching equipment, internally charged with a saturated solution of ammonium carbonate, and ammonium bicarbonate was added thereto by 1.15 times the theoretical amount; the clinker was feed into the leaching equipment, aqua ammonia was added simultaneously (such that the mass percentage of NH₃ in the leaching solution was 4.1%) and enclosed, then carbon dioxide gas was introduce to control the absolute pressure of the leaching system at 1.3atm, and reaction was carried out at 32°C for 9h. After completion of the reaction, the leached ore slurry was subjected to suction filtration, and the filter cake was washed with purified water three times. Leaching rate of tungsten was 74.75%. After that, the procedures were similar to Example 3, but with supplemented ammonium bicarbonate, aqua ammonia and CO₂.
Example 37: In accordance with a molecular ratio of CaO/WO₃ being 2.2, a scheelite (mass percentage of WO₃ was 49.53%, and mass percentage of Fe was 0.43%) was finely ground with a limestone, and then mixed uniformly to obtain a crude material, calcium fluoride was added in an amount that was 1.5% (mass percentage) of the amount of dry tungsten ore raw material, particle size of the crude material was ≤24µm; and then, in a calcinating furnace, calcination was carried out at 880°C under a reducing atmosphere for 3h to obtain a clinker. After the clinker was cooled to room temperature, it was finely ground with a ball mill, particle size of the clinker was ≤74µm; a ball-milling leacher was chosed as the leaching equipment, internally charged with a saturated solution of ammonium carbonate; the clinker was feed into the leaching equipment and reacted at 32°C for 8.0h. After completion of the reaction, the leached ore slurry was subjected to suction filtration, and the filter cake was washed with purified water three times. Leaching rate of tungsten was 55.45%. After that, the procedures were similar to Example 3, but with supplemented aqua ammonia and CO₂.
Example 38: In accordance with a molecular ratio of (CaO+FeO)/WO₃ being 10, a scheelite (mass percentage of WO₃ was 52.33%, and mass percentage of Fe was 2.04%) was finely ground with a siderite and a clinker leached slag, and then mixed uniformly to obtain a crude material, particle size of the crude material was ≤38µm; and then, in a calcinating furnace, calcination was carried out at 950°C under a neutral atmosphere for 1h to obtain a clinker. After the clinker was cooled to room temperature, it was finely ground with a vibration mill, particle size of the clinker was ≤45µm; a ball-milling leacher was chosed as the leaching equipment, internally charged with an ammonium carbonate solution, the concentration of ammonium carbonate was 58g-(NH₄)₂CO₃/100g-H₂O, and ammonium bicarbonate was added thereto by 1.3 times the theoretical amount; the clinker was feed into the leaching equipment and reacted at 40°C for 9h. After completion of the reaction, the leached ore slurry was subjected to pressure filtration, and the filter cake was washed with purified water three times. Leaching rate of tungsten was 96.93%. After that, the procedures were similar to Example 3, and the APT product met the state standards for grade 0 products.
Example 39: In accordance with a molecular ratio of CaO/WO₃ being 5.1, a scheelite (mass percentage of WO₃ was 49.53%, and mass percentage of Fe was 0.43%) was finely ground with a clinker leached slag, and then mixed uniformly to obtain a crude material, calcium fluoride was added in an amount that was 1.0% (mass percentage) of the amount of dry tungsten ore raw material, particle size of the crude material was ≤33µm; and then, in a calcinating furnace, calcination was carried out at 895°C under a neutral atmosphere for 8h to obtain a clinker. After the clinker was cooled to room temperature, it was finely ground with a vibration mill, particle size of the clinker was ≤45µm; a leaching tank with stirring was chosed as the leaching equipment, internally charged with a saturated solution of ammonium carbonate, and ammonium bicarbonate was added thereto by 1.9 times the theoretical amount; the clinker was feed into the leaching equipment and reacted at 20°C for 6h. After completion of the reaction, the leached ore slurry was subjected to suction filtration, and the filter cake was washed with purified water three times. Leaching rate of tungsten was 95.01%. After that, the procedures were similar to Example 3, but with supplemented aqua ammonia and CO₂.
Example 40: In accordance with a molecular ratio of CaO/WO₃ being 3.9, a tungsten slime (mass percentage of WO₃ was 16.22%) was finely ground with a limestone, and then mixed uniformly to obtain a crude material, particle size of the crude material was ≤40µm; and then, in a calcinating furnace, calcination was carried out at 940°C under a reducing atmosphere for 3h to obtain a clinker. After the clinker was cooled to room temperature, it was finely ground with a ball mill, particle size of the clinker was ≤45µm; a leaching tank with stirring was chosed as the leaching equipment, internally charged with a saturated solution of ammonium carbonate; the clinker was feed into the leaching equipment, aqua ammonia was added simultaneously (such that the mass percentage of NH₃ in the leaching solution was 12%) and enclosed, and reaction was carried out at 50°C for 4h. After completion of the reaction, the leached ore slurry was subjected to suction filtration, and the filter cake was washed with purified water three times. Leaching rate of tungsten was 92.31%. After that, the procedures were similar to Example 3, but with supplemented aqua ammonia and CO₂.
Example 41: In accordance with a molecular ratio of (CaO+FeO)/WO₃ being 6.5, a scheelite (mass percentage of WO₃ was 52.33%, and mass percentage of Fe was 2.04%) was finely ground with a limestone, and then mixed uniformly to obtain a crude material, calcium fluoride was added in an amount that was 0.7% (mass percentage) of the amount of dry tungsten ore raw material, particle size of the crude material was ≤30µm; and then, in a calcinating furnace, calcination was carried out at 965°C under a neutral atmosphere for 1.5h to obtain a clinker. After the clinker was cooled to room temperature, it was finely ground with a ball mill, particle size of the clinker was ≤74µm; a ball-milling leacher was chosed as the leaching equipment, internally charged with an ammonium carbonate solution, the concentration of ammonium carbonate was 67g-(NH₄)₂CO₃/100g-H₂O, and ammonium bicarbonate was added thereto by 1.4 times the theoretical amount; the clinker was feed into the leaching equipment and reacted at 10°C for 20.0h. After completion of the reaction, the leached ore slurry was subjected to suction filtration, and the filter cake was washed with purified water three times. Leaching rate of tungsten was 91.96%. After that, the procedures were similar to Example 3, and the APT product met the state standards for grade 0 products.
Example 42: In accordance with a molecular ratio of (CaO+FeO)/WO₃ being 3.6, a mixed ore of wolframite-scheelite (mass percentage of WO₃ was 43.20%, and mass percentage of Fe was 7.18%) was finely ground with a clinker leached slag, and then mixed uniformly to obtain a crude material, calcium fluoride was added in an amount that was 2.6% (mass percentage) of the amount of dry tungsten ore raw material, particle size of the crude material was ≤25µm; and then, in a calcinating furnace, calcination was carried out at 850°C under a neutral atmosphere for 3h to obtain a clinker. After the clinker was cooled to room temperature, it was finely ground with a ball mill, particle size of the clinker was ≤74µm; a ball-milling leacher was chosed as the leaching equipment, internally charged with an ammonium carbonate solution, the concentration of ammonium carbonate was 70g-(NH₄)₂CO₃/100g-H₂O, and ammonium bicarbonate was added thereto by 1.2 times the theoretical amount; the clinker was feed into the leaching equipment and reacted at 40°C for 3.5h. After completion of the reaction, the leached ore slurry was subjected to suction filtration, and the filter cake was washed with purified water three times. Leaching rate of tungsten was 98.76%. After that, the procedures were similar to Example 3, and the APT product met the state standards for grade 0 products.
Example 43: In accordance with a molecular ratio of CaO/WO₃ being 10, a scheelite (mass percentage of WO₃ was 49.53%, and mass percentage of Fe was 0.43%) was finely ground with a clinker leached slag, and then mixed uniformly to obtain a crude material, particle size of the crude material was ≤28µm; and then, in a calcinating furnace, calcination was carried out at 845°C under a neutral atmosphere for 4h to obtain a clinker. After the clinker was cooled to room temperature, it was finely ground with a vibration mill, particle size of the clinker was ≤74µm; a leaching tank with stirring was chosed as the leaching equipment, internally charged with a saturated solution of ammonium carbonate; the clinker was feed into the leaching equipment, aqua ammonia was added simultaneously (such that the mass percentage of NH₃ in the leaching solution was 28%) and enclosed, reaction was carried out at 27°C for 4.5h. After completion of the reaction, the leached ore slurry was subjected to suction filtration, and the filter cake was washed with purified water three times. Leaching rate of tungsten was 96.01%. After that, the procedures were similar to Example 3, but with supplemented ammonium carbonate, aqua ammonia and CO₂.
Example 44: In accordance with a molecular ratio of CaO/WO₃ being 3.5, a scheelite (mass percentage of WO₃ was 49.53%, and mass percentage of Fe was 0.43%) was finely ground with a clinker leached slag, and then mixed uniformly to obtain a crude material, calcium fluoride was added in an amount that was 5.5% (mass percentage) of the amount of dry tungsten ore raw material, particle size of the crude material was ≤40µm; and then, in a calcinating furnace, calcination was carried out at 845°C under a neutral atmosphere for 10h to obtain a clinker. After the clinker was cooled to room temperature, it was finely ground with a twin-roller machine, particle size of the clinker was ≤150µm; a ball-milling leacher was chosed as the leaching equipment, internally charged with a saturated solution of ammonium carbonate; the clinker was feed into the leaching equipment, aqua ammonia was added simultaneously (such that the mass percentage of NH₃ in the leaching solution was 7.5%) and enclosed, reaction was carried out at 27°C for 4.5h. After completion of the reaction, the leached ore slurry was subjected to suction filtration, and the filter cake was washed with purified water three times. Leaching rate of tungsten was 98.49%. After that, the procedures were similar to Example 3, but with supplemented aqua ammonia and CO₂.
Example 45: In accordance with a molecular ratio of CaO/WO₃ being 4.5, a scheelite (mass percentage of WO₃ was 49.53%, and mass percentage of Fe was 0.43%) was finely ground with a clinker leached slag, and then mixed uniformly to obtain a crude material, particle size of the crude material was ≤45µm; and then, in a calcinating furnace, calcination was carried out at 1050°C under a neutral atmosphere for 6h to obtain a clinker. After the clinker was cooled to room temperature, it was finely ground with a rod mill, particle size of the clinker was ≤45µm; a leaching tank with stirring was chosed as the leaching equipment, internally charged with a saturated solution of ammonium carbonate; the clinker was feed into the leaching equipment, aqua ammonia was added simultaneously (such that the mass percentage of NH₃ in the leaching solution was 9.1%) and enclosed, reaction was carried out at 32°C for 3.8h. After completion of the reaction, the leached ore slurry was subjected to suction filtration, and the filter cake was washed with purified water three times. Leaching rate of tungsten was 97.15%. After that, the procedures were similar to Example 3, but with supplemented ammonium bicarbonate, aqua ammonia and CO₂.
Example 46: In accordance with a molecular ratio of (CaO+FeO)/WO₃ being 4.5, a scheelite (mass percentage of WO₃ was 52.33%, and mass percentage of Fe was 2.04%) was finely ground with a clinker leached slag, and then mixed uniformly to obtain a crude material, calcium fluoride was added in an amount that was 6% (mass percentage) of the amount of dry tungsten ore raw material, particle size of the crude material was ≤45µm; and then, in a calcinating furnace, calcination was carried out at 995°C under a neutral atmosphere for 0.5h to obtain a clinker. After the clinker was cooled to room temperature, it was finely ground with a Raymond mill, particle size of the clinker was ≤8µm; a stirring leacher was chosed as the leaching equipment, internally charged with a saturated solution of ammonium carbonate, and ammonium bicarbonate was added thereto by 1.2 times the theoretical amount; the clinker was feed into the leaching equipment and reacted at 38°C for 5h. After completion of the reaction, the leached ore slurry was subjected to suction filtration, and the filter cake was washed with purified water 2 times. Leaching rate of tungsten was 97.22%. After that, the procedures were similar to Example 3, and the APT product met the state standards for grade 0 products.
Example 47: In accordance with a molecular ratio of (CaO+FeO)/WO₃ being 5.5, a scheelite (mass percentage of WO₃ was 52.33%, and mass percentage of Fe was 2.04%) was finely ground with a clinker leached slag, and then mixed uniformly to obtain a crude material, calcium fluoride was added in an amount that was 2% (mass percentage) of the amount of dry tungsten ore raw material, particle size of the crude material was ≤45µm; and then, in a calcinating furnace, calcination was carried out at 960°C under a reducing atmosphere for 2h to obtain a clinker. After the clinker was cooled to room temperature, it was finely ground with an airflow crusher, particle size of the clinker was ≤20µm; a stirring leacher was chosed as the leaching equipment, internally charged with a saturated solution of ammonium carbonate, and ammonium bicarbonate was added thereto by 1.2 times the theoretical amount; the clinker was feed into the leaching equipment and reacted at 38°C for 5h. After completion of the reaction, the leached ore slurry was subjected to suction filtration, and the filter cake was washed with purified water 2 times. Leaching rate of tungsten was 98.16%. After that, the procedures were similar to Example 3, and the APT product met the state standards for grade 0 products.
Example 48: In accordance with a molecular ratio of (CaO+FeO)/WO₃ being 4.2, a scheelite (mass percentage of WO₃ was 52.33%, and mass percentage of Fe was 2.04%) was finely ground with a clinker leached slag, and then mixed uniformly to obtain a crude material, calcium fluoride was added in an amount that was 3.5% (mass percentage) of the amount of dry tungsten ore raw material, particle size of the crude material was ≤45µm; and then, in a calcinating furnace, calcination was carried out at 850°C under a neutral atmosphere for 0.5h to obtain a clinker. After the clinker was cooled to room temperature, it was finely ground with a Raymond mill, particle size of the clinker was ≤8µm; a stirring leacher was chosed as the leaching equipment, internally charged with a saturated solution of ammonium carbonate, and ammonium bicarbonate was added thereto by 1.5 times the theoretical amount;the clinker was feed into the leaching equipment and reacted at 50°C for 4h. After completion of the reaction, the leached ore slurry was subjected to pressure filtration, and the filter cake was washed with purified water 4 times. Leaching rate of tungsten was 98.33%. After that, the procedures were similar to Example 3, and the APT product met the state standards for grade 0 products.
Example 49: In accordance with a molecular ratio of (CaO+FeO)/WO₃ being 4.1, a scheelite (mass percentage of WO₃ was 52.33%, and mass percentage of Fe was 2.04%) was finely ground with a clinker leached slag, and then mixed uniformly to obtain a crude material, particle size of the crude material was ≤53µm; and then, in a calcinating furnace, calcination was carried out at 930°C under a neutral atmosphere for 8h to obtain a clinker. After the clinker was cooled to room temperature, it was finely ground with an overhang roll crusher, particle size of the clinker was ≤45µm; a stirring leacher was chosed as the leaching equipment, internally charged with a saturated solution of ammonium carbonate, and ammonium bicarbonate was added thereto by 1.1 times the theoretical amount; the clinker was feed into the leaching equipment and reacted at 25°C for 4h. After completion of the reaction, the leached ore slurry was subjected to suction filtration, and the filter cake was washed with purified water 2 times. Leaching rate of tungsten was 94.22%. After that, the procedures were similar to Example 3, and the APT product met the state standards for grade 0 products.
Example 50: In accordance with a molecular ratio of CaO/WO₃ being 5.6, a scheelite (mass percentage of WO₃ was 60.94%) was finely ground with a clinker leached slag, and then mixed uniformly to obtain a crude material, calcium fluoride was added in an amount that was 2.5% (mass percentage) of the amount of dry tungsten ore raw material, particle size of the crude material was ≤53µm; and then, in a calcinating furnace, calcination was carried out at 910°C under a neutral atmosphere for 1h to obtain a clinker. After the clinker was cooled to room temperature, it was finely ground with a ball mill, particle size of the clinker was ≤45µm; a stirring leacher was chosed as the leaching equipment, internally charged with a saturated solution of ammonium carbonate, and ammonium bicarbonate was added thereto by 1.5 times the theoretical amount; the clinker was feed into the leaching equipment and reacted at 62°C for 4h. After completion of the reaction, the leached ore slurry was subjected to suction filtration, and the filter cake was washed with purified water 5 times. Leaching rate of tungsten was 98.78%. After that, the procedures were similar to Example 3, and the APT product met the state standards for grade 0 products.
Example 51: In accordance with a molecular ratio of (CaO+FeO)/WO₃ being 4.7, a scheelite (mass percentage of WO₃ was 52.33%, and mass percentage of Fe was 2.04%) was finely ground with a clinker leached slag, and then mixed uniformly to obtain a crude material, calcium fluoride was added in an amount that was 2.8% (mass percentage) of the amount of dry tungsten ore raw material, particle size of the crude material was ≤74µm; and then, in a calcinating furnace, calcination was carried out at 900°C under a neutral atmosphere for 2h to obtain a clinker. After the clinker was cooled to room temperature, it was finely ground with a ball mill, particle size of the clinker was ≤45µm; a stirring leacher was chosed as the leaching equipment, internally charged with a saturated solution of ammonium carbonate, and ammonium bicarbonate was added thereto by 1.6 times the theoretical amount; the clinker was feed into the leaching equipment and reacted at 75°C for 1.5h. After completion of the reaction, the leached ore slurry was subjected to suction filtration, and the filter cake was washed with purified water 2 times. Leaching rate of tungsten was 95.01%. After that, the procedures were similar to Example 3, and the APT product met the state standards for grade 0 products.
Example 52: In accordance with a molecular ratio of CaO/WO₃ being 3.8, a scheelite (mass percentage of WO₃ was 49.53%, and mass percentage of Fe was 0.43%) was finely ground with a clinker leached slag, and then mixed uniformly to obtain a crude material, calcium fluoride was added in an amount that was 3.3% (mass percentage) of the amount of dry tungsten ore raw material, particle size of the crude material was ≤45µm; and then, in a calcinating furnace, calcination was carried out at 880°C under a neutral atmosphere for 1h to obtain a clinker. After the clinker was cooled to room temperature, it was finely ground with a vibration mill, particle size of the clinker was ≤45µm; a leaching tank with stirring was chosed as the leaching equipment, internally charged with a saturated solution of ammonium carbonate; the clinker was feed into the leaching equipment, aqua ammonia was added simultaneously (such that the mass percentage of NH₃ in the leaching solution was 8.0%) and enclosed, reaction was carried out at 50°C for 3.8h. After completion of the reaction, the leached ore slurry was subjected to suction filtration, and the filter cake was washed with purified water three times. Leaching rate of tungsten was 96.15%. After that, the procedures were similar to Example 3, but with supplemented aqua ammonia and CO₂.
Example 53: In accordance with a molecular ratio of CaO/WO₃ being 4.8, a scheelite (mass percentage of WO₃ was 49.53%, and mass percentage of Fe was 0.43%) was finely ground with a clinker leached slag, and then mixed uniformly to obtain a crude material, calcium fluoride was added in an amount that was 7% (mass percentage) of the amount of dry tungsten ore raw material, particle size of the crude material was ≤40µm; and then, in a calcinating furnace, calcination was carried out at 810°C under a neutral atmosphere for 1h to obtain a clinker. After the clinker was cooled to room temperature, it was finely ground with a planetary mill, particle size of the clinker was ≤45µm; a leaching tank with stirring was chosed as the leaching equipment, internally charged with a saturated solution of ammonium carbonate; the clinker was feed into the leaching equipment, aqua ammonia was added simultaneously (such that the mass percentage of NH₃ in the leaching solution was 5.5%) and enclosed, reaction was carried out at 45°C for 6h. After completion of the reaction, the leached ore slurry was subjected to suction filtration, and the filter cake was washed with purified water three times. Leaching rate of tungsten was 98.63%. After that, the procedures were similar to Example 3, but with supplemented aqua ammonia and CO₂.
Example 54: In accordance with a molecular ratio of CaO/WO₃ being 3.0, a scheelite (mass percentage of WO₃ was 49.53%, and mass percentage of Fe was 0.43%) was finely ground with a clinker leached slag, and then mixed uniformly to obtain a crude material, calcium fluoride was added in an amount that was 5% (mass percentage) of the amount of dry tungsten ore raw material, particle size of the crude material was ≤96µm; and then, in a calcinating furnace, calcination was carried out at 880°C under a reducing atmosphere for 1h to obtain a clinker. After the clinker was cooled to room temperature, it was finely ground with a stirring mill, particle size of the clinker was ≤45µm; a leaching tank with stirring was chosed as the leaching equipment, internally charged with a saturated solution of ammonium carbonate; the clinker was feed into the leaching equipment, aqua ammonia was added simultaneously (such that the mass percentage of NH3 in the leaching solution was %) and enclosed, reaction was carried out at 32°C for 3.8h. After completion of the reaction, the leached ore slurry was subjected to suction filtration, and the filter cake was washed with purified water three times. Leaching rate of tungsten was 96.75%. After that, the procedures were similar to Example 3, but with supplemented aqua ammonia and CO₂.
Example 55: In accordance with a molecular ratio of CaO/WO₃ being 12, a scheelite (mass percentage of WO₃ was 49.53%, and mass percentage of Fe was 0.43%) was finely ground with a clinker leached slag, and then mixed uniformly to obtain a crude material, calcium fluoride was added in an amount that was 1.5% (mass percentage) of the amount of dry tungsten ore raw material, particle size of the crude material was ≤36µm; and then, in a calcinating furnace, calcination was carried out at 750°C under a neutral atmosphere for 5h to obtain a clinker. After the clinker was cooled to room temperature, it was finely ground with a twin-roller machine, particle size of the clinker was ≤100µm; a ball-milling leacher was chosed as the leaching equipment, internally charged with a saturated solution of ammonium carbonate, and ammonium bicarbonate was added thereto by 1.4 times the theoretical amount; the clinker was feed into the leaching equipment and reacted at 32°C for 3.8h. After completion of the reaction, the leached ore slurry was subjected to suction filtration, and the filter cake was washed with purified water three times. Leaching rate of tungsten was 86.35%.
Example 56: In accordance with a molecular ratio of (CaO+FeO)/WO₃ being 7, a scheelite (mass percentage of WO₃ was 52.33%, and mass percentage of Fe was 2.04%) was finely ground with a limestone, and then mixed uniformly to obtain a crude material, particle size of the crude material was ≤106µm; and then, in a calcinating furnace, calcination was carried out at 1000°C under a neutral atmosphere for 7h to obtain a clinker. After the clinker was cooled to room temperature, it was finely ground with a vibration mill, particle size of the clinker was ≤45µm; a ball-milling leacher was chosed as the leaching equipment, internally charged with an ammonium carbonate solution, the concentration of ammonium carbonate was 35g-(NH₄)₂CO₃ /100g-H₂O, and ammonium bicarbonate was added thereto by 1.3 times the theoretical amount;the clinker was feed into the leaching equipment and reacted at 40°C for 9h. After completion of the reaction, the leached ore slurry was subjected to suction filtration, and the filter cake was washed with purified water three times. Leaching rate of tungsten was 95.99%. After that, the procedures were similar to Example 3, and the APT product met the state standards for grade 0 products.
Example 57: In accordance with a molecular ratio of CaO/WO₃ being 7, a scheelite (mass percentage of WO₃ was 49.53%, and mass percentage of Fe was 0.43%) was finely ground with a clinker leached slag, and then mixed uniformly to obtain a crude material, particle size of the crude material was ≤45µm; and then, in a calcinating furnace, calcination was carried out at 1200°C under a neutral atmosphere for 5h to obtain a clinker. After the clinker was cooled to room temperature, it was finely ground with a vibration mill, particle size of the clinker was ≤74µm; a ball-milling leacher was chosed as the leaching equipment, internally charged with a saturated solution of ammonium carbonate, and ammonium bicarbonate was added thereto by 1.4 times the theoretical amount;the clinker was feed into the leaching equipment and reacted at 20°C for 6h. After completion of the reaction, the leached ore slurry was subjected to suction filtration, and the filter cake was washed with purified water three times. Leaching rate of tungsten was 78.01%.
Example 58: In accordance with a molecular ratio of CaO/WO₃ being 8, a tungsten slime (mass percentage of WO₃ was 16.22%) was finely ground with a clinker leached slag, and then mixed uniformly to obtain a crude material, particle size of the crude material was ≤96µm; and then, in a calcinating furnace, calcination was carried out at 1400°C under a reducing atmosphere for 3h to obtain a clinker. After the clinker was cooled to room temperature, it was finely ground with a ball mill, particle size of the clinker was ≤45µm; a leaching tank with stirring was chosed as the leaching equipment, internally charged with a saturated solution of ammonium carbonate;the clinker was feed into the leaching equipment, aqua ammonia was added simultaneously (such that the mass percentage of NH₃ in the leaching solution was 6%) and enclosed, reaction was carried out at 30°C for 4h. After completion of the reaction, the leached ore slurry was subjected to suction filtration, and the filter cake was washed with purified water three times. Leaching rate of tungsten was 81.51%. After that, the procedures were similar to Example 3, but with supplemented ammonium carbonate, ammonium bicarbonate, aqua ammonia, and CO₂.
Example 59: In accordance with a molecular ratio of (CaO+FeO)/WO₃ being 3.5, a scheelite (mass percentage of WO₃ was 52.33%, and mass percentage of Fe was 2.04%) was finely ground with a clinker leached slag, and then mixed uniformly to obtain a crude material, particle size of the crude material was ≤45µm; and then, in a calcinating furnace, calcination was carried out at 965°C under a neutral atmosphere for 8h to obtain a clinker. After the clinker was cooled to room temperature, it was finely ground with a centrifugal mill, particle size of the clinker was ≤45µm; a ball-milling leacher was chosed as the leaching equipment, internally charged with an ammonium carbonate solution, the concentration of ammonium carbonate was 20g-(NH₄)₂CO₃/100g-H₂O, and ammonium bicarbonate was added thereto by 1.4 times the theoretical amount;the clinker was feed into the leaching equipment and reacted at 18°C for 6.5h. After completion of the reaction, the leached ore slurry was subjected to suction filtration, and the filter cake was washed with purified water three times. Leaching rate of tungsten was 92.96%. After that, the procedures were similar to Example 3.
Example 60: In accordance with a molecular ratio of (CaO+FeO)/WO₃ being 3.2, a mixed ore of wolframite-scheelite (mass percentage of WO₃ was 43.20%, and mass percentage of Fe was 7.18%) was finely ground with a clinker leached slag and calcium fluoride, and then mixed uniformly to obtain a crude material, calcium fluoride was added in an amount that was 1.5% (mass percentage) of the amount of dry tungsten ore raw material, particle size of the crude material was ≤45µm; and then, in a calcinating furnace, calcination was carried out at 850°C under a neutral atmosphere for 3h to obtain a clinker. After the clinker was cooled to room temperature, it was finely ground with a vibration mill, particle size of the clinker was ≤45µm; a ball-milling leacher was chosed as the leaching equipment, internally charged with a saturated solution of ammonium carbonate, and ammonium bicarbonate was added thereto by 1.25 times the theoretical amount; the clinker was feed into the leaching equipment and reacted at 28°C for 3.5h. After completion of the reaction, the leached ore slurry was subjected to suction filtration, and the filter cake was washed with purified water three times. Leaching rate of tungsten was 96.76%. After that, the procedures were similar to Example 3, and the APT product met the state standards for grade 0 products.
Example 61: In accordance with a molecular ratio of CaO/WO₃ being 9, a scheelite (mass percentage of WO₃ was 49.53%, and mass percentage of Fe was 0.43%) was finely ground with a clinker leached slag and calcium fluoride, and then mixed uniformly to obtain a crude material, calcium fluoride was added in an amount that was 1% (mass percentage) of the amount of dry tungsten ore raw material, particle size of the crude material was ≤45µm; and then, in a calcinating furnace, calcination was carried out at 950°C under a neutral atmosphere for 4h to obtain a clinker. After the clinker was cooled to room temperature, it was finely ground with a ball mill, particle size of the clinker was ≤96µm; a ball-milling leacher was chosed as the leaching equipment, internally charged with a saturated solution of ammonium carbonate;the clinker was feed into the leaching equipment, aqua ammonia was added simultaneously(such that the mass percentage of NH₃ in the leaching solution was 5.9%) and enclosed, reaction was carried out at 47°C for 4.5h. After completion of the reaction, the leached ore slurry was subjected to suction filtration, and the filter cake was washed with purified water three times. Leaching rate of tungsten was 98.15%. After that, the procedures were similar to Example 3, but with supplemented aqua ammonia and CO₂.
Example 62: In accordance with a molecular ratio of CaO/WO₃ being 3.2, a scheelite (mass percentage of WO₃ was 49.53%, and mass percentage of Fe was 0.43%) was finely ground with a clinker leached slag and calcium fluoride, and then mixed uniformly to obtain a crude material, calcium fluoride was added in an amount that was 2.8% (mass percentage) of the amount of dry tungsten ore raw material, particle size of the crude material was ≤45µm; and then, in a calcinating furnace, calcination was carried out at 845°C under a neutral atmosphere for 5h to obtain a clinker. After the clinker was cooled to room temperature, it was finely ground with a ball mill, particle size of the clinker was ≤45µm; a leaching tank with stirring was chosed as the leaching equipment, internally charged with an ammonium carbonate solution, the concentration of ammonium carbonate was 40g-(NH₄)₂CO₃/100g-H₂O; the clinker was feed into the leaching equipment, aqua ammonia was added simultaneously (such that the mass percentage of NH₃ in the leaching solution was 4%) and enclosed, reaction was carried out at 45°C for 4.5h. After completion of the reaction, the leached ore slurry was subjected to suction filtration, and the filter cake was washed with purified water three times. Leaching rate of tungsten was 97.65%. After that, the procedures were similar to Example 3, but with supplemented aqua ammonia and CO₂.
Example 63: In accordance with a molecular ratio of CaO/WO₃ being 3.8, a scheelite (mass percentage of WO₃ was 49.53%, and mass percentage of Fe was 0.43%) was finely ground with a clinker leached slag and calcium fluoride, and then mixed uniformly to obtain a crude material, calcium fluoride was added in an amount that was 1.2% (mass percentage) of the amount of dry tungsten ore raw material, particle size of the crude material was ≤120µm; and then, in a calcinating furnace, calcination was carried out at 870°C under a neutral atmosphere for 3h to obtain a clinker. After the clinker was cooled to room temperature, it was finely ground with a ball mill, particle size of the clinker was ≤45µm; a leaching tank with stirring was chosed as the leaching equipment, internally charged with an ammonium carbonate solution, the concentration of ammonium carbonate was 45g-(NH₄)₂CO₃/100g-H₂O; the clinker was feed into the leaching equipment, aqua ammonia was added simultaneously(such that the mass percentage of NH₃ in the leaching solution was 7.9%) and enclosed, reaction was carried out at 5°C for 15h. After completion of the reaction, the leached ore slurry was subjected to suction filtration, and the filter cake was washed with purified water three times. Leaching rate of tungsten was 93.15%. After that, the procedures were similar to Example 3, but with supplemented ammonium carbonate, aqua ammonia, and CO₂.
Example 64: In accordance with a molecular ratio of (CaO+FeO)/WO₃ being 4.5, a scheelite (mass percentage of WO₃ was 52.33%, and mass percentage of Fe was 2.04%) was finely ground with a clinker leached slag and calcium fluoride, and then mixed uniformly to obtain a crude material, calcium fluoride was added in an amount that was 5.4% (mass percentage) of the amount of dry tungsten ore raw material, particle size of the crude material was ≤45µm; and then, in a calcinating furnace, calcination was carried out at 750°C under a neutral atmosphere for 4h to obtain a clinker. After the clinker was cooled to room temperature, it was finely ground with a vibration mill, particle size of the clinker was ≤45µm; a ball-milling leacher was chosed as the leaching equipment, internally charged with a saturated solution of ammonium carbonate, and ammonium bicarbonate was added thereto by 1.2 times the theoretical amount; the clinker was feed into the leaching equipment and reacted at 38°C for 5h. After completion of the reaction, the leached ore slurry was subjected to suction filtration, and the filter cake was washed with purified water 2 times. Leaching rate of tungsten was 97.22%. After that, the procedures were similar to Example 3, and the APT product met the state standards for grade 0 products.
Example 65: In accordance with a molecular ratio of (CaO+FeO)/WO₃ being 3.4, a scheelite (mass percentage of WO₃ was 52.33%, and mass percentage of Fe was 2.04%) was finely ground with a clinker leached slag and calcium fluoride, and then mixed uniformly to obtain a crude material, calcium fluoride was added in an amount that was 3% (mass percentage) of the amount of dry tungsten ore raw material, particle size of the crude material was ≤45µm; and then, in a calcinating furnace, calcination was carried out at 760°C under a neutral atmosphere for 15h to obtain a clinker. After the clinker was cooled to room temperature, it was finely ground with a rod mill, particle size of the clinker was ≤45µm; a stirring leacher was chosed as the leaching equipment, internally charged with a saturated solution of ammonium carbonate, and ammonium bicarbonate was added thereto by 1.2 times the theoretical amount; the clinker was feed into the leaching equipment and reacted at 38°C for 5h. After completion of the reaction, the leached ore slurry was subjected to suction filtration, and the filter cake was washed with purified water 2 times. Leaching rate of tungsten was 97.35%. After that, the procedures were similar to Example 3, and the APT product met the state standards for grade 0 products.
Example 66: In accordance with a molecular ratio of (CaO+FeO)/WO₃ being 4.2, a scheelite (mass percentage of WO₃ was 52.33%, and mass percentage of Fe was 2.04%) was finely ground with a clinker leached slag, and then mixed uniformly to obtain a crude material, particle size of the crude material was ≤45µm; and then, in a calcinating furnace, calcination was carried out at 980°C under a neutral atmosphere for 8h to obtain a clinker. After the clinker was cooled to room temperature, it was finely ground with a ball mill, particle size of the clinker was ≤45µm; a stirring leacher was chosed as the leaching equipment, internally charged with a saturated solution of ammonium carbonate, and ammonium bicarbonate was added thereto by 4 times the theoretical amount; the clinker was feed into the leaching equipment and reacted at 50°C for 4h. After completion of the reaction, the leached ore slurry was subjected to suction filtration, and the filter cake was washed with purified water 4 times. Leaching rate of tungsten was 96.33%. After that, the procedures were similar to Example 3, and the APT product met the state standards for grade 0 products.
Example 67: In accordance with a molecular ratio of (CaO+FeO)/WO₃ being 4.1, a scheelite (mass percentage of WO₃ was 52.33%, and mass percentage of Fe was 2.04%) was finely ground with a limestone and a fluorite, and then mixed uniformly to obtain a crude material, the fluorite was added in an amount that was 6% (mass percentage) of the amount of dry tungsten ore raw material, particle size of the crude material was ≤48µm; and then, in a calcinating furnace, calcination was carried out at 970°C under a neutral atmosphere for 2h to obtain a clinker. After the clinker was cooled to room temperature, it was finely ground with a stirring mill, particle size of the clinker was ≤40µm; a stirring leacher was chosed as the leaching equipment, internally charged with an ammonium carbonate solution, the concentration of ammonium carbonate was 25g-(NH₄)₂CO₃/100g-H₂O, and ammonium bicarbonate was added thereto by 1.4 times the theoretical amount;the clinker was feed into the leaching equipment and reacted at 80°C for 0.5h. After completion of the reaction, the leached ore slurry was subjected to suction filtration, and the filter cake was washed with purified water 2 times. Leaching rate of tungsten was 96.36%. After that, the procedures were similar to Example 3, and the APT product met the state standards for grade 0 products.
Example 68: In accordance with a molecular ratio of (CaO+FeO)/WO₃ being 6.5, a scheelite (mass percentage of WO₃ was 52.33%, and mass percentage of Fe was 2.04%) was finely ground with a clinker leached slag, and then mixed uniformly to obtain a crude material, particle size of the crude material was ≤53µm; and then, in a calcinating furnace, calcination was carried out at 990°C under a neutral atmosphere for 8h to obtain a clinker. After the clinker was cooled to room temperature, it was finely ground with a rod mill, particle size of the clinker was ≤74µm; a ball-milling leacher was chosed as the leaching equipment, internally charged with a saturated solution of ammonium carbonate, and ammonium bicarbonate was added thereto by 3 times the theoretical amount; the clinker was feed into the leaching equipment and reacted at 62°C for 4h. After completion of the reaction, the leached ore slurry was subjected to suction filtration, and the filter cake was washed with purified water 5 times. Leaching rate of tungsten was 97.70%. After that, the procedures were similar to Example 3, and the APT product met the state standards for grade 0 products.
Example 69: In accordance with a molecular ratio of (CaO+FeO)/WO₃ being 4.7, a scheelite (mass percentage of WO₃ was 52.33%, and mass percentage of Fe was 2.04%) was finely ground with a clinker leached slag and a fluorite, and then mixed uniformly to obtain a crude material, the fluorite was added in an amount that was 4% (mass percentage) of the amount of dry tungsten ore raw material, particle size of the crude material was ≤45µm; and then, in a calcinating furnace, calcination was carried out at 980°C under a neutral atmosphere for 2h to obtain a clinker. After the clinker was cooled to room temperature, it was finely ground with a ball mill, particle size of the clinker was ≤40µm; a stirring leacher was chosed as the leaching equipment, internally charged with a saturated solution of ammonium carbonate, and ammonium bicarbonate was added thereto by 1.6 times the theoretical amount; the clinker was feed into the leaching equipment and reacted at 75°C for 3.5h. After completion of the reaction, the leached ore slurry was subjected to suction filtration, and the filter cake was washed with purified water 2 times. Leaching rate of tungsten was 97.01%. After that, the procedures were similar to Example 3, and the APT product met the state standards for grade 0 products.
Example 70: In accordance with a molecular ratio of CaO/WO₃ being 3.2, a scheelite (mass percentage of WO₃ was 49.53%, and mass percentage of Fe was 0.43%) was finely ground with a clinker leached slag and calcium fluoride, and then mixed uniformly to obtain a crude material, calcium fluoride was added in an amount that was 2.5% (mass percentage) of the amount of dry tungsten ore raw material, particle size of the crude material was ≤36µm; and then, in a calcinating furnace, calcination was carried out at 880°C under a neutral atmosphere for 1h to obtain a clinker. After the clinker was cooled to room temperature, it was finely ground with a ball mill, particle size of the clinker was ≤45µm; a leaching tank with stirring was chosed as the leaching equipment, internally charged with a saturated solution of ammonium carbonate; the clinker was feed into the leaching equipment, aqua ammonia was added simultaneously (such that the mass percentage of NH₃ in the leaching solution was 6.7%) and enclosed, reaction was carried out at 90°C for 0.5h. After completion of the reaction, the leached ore slurry was subjected to suction filtration, and the filter cake was washed with purified water three times. Leaching rate of tungsten was 93.15%. After that, the procedures were similar to Example 3, but with supplemented aqua ammonia and CO₂.
Example 71: In accordance with a molecular ratio of CaO/WO₃ being 3.8, a scheelite (mass percentage of WO₃ was 49.53%, and mass percentage of Fe was 0.43%) was finely ground with a clinker leached slag and calcium fluoride, and then mixed uniformly to obtain a crude material, calcium fluoride was added in an amount that was 3.6% (mass percentage) of the amount of dry tungsten ore raw material, particle size of the crude material was ≤90µm; and then, in a calcinating furnace, calcination was carried out at 860°C under a neutral atmosphere for 1h to obtain a clinker. After the clinker was cooled to room temperature, it was finely ground with a ball mill, particle size of the clinker was ≤45µm; a leaching tank with stirring was chosed as the leaching equipment, internally charged with a saturated solution of ammonium carbonate, and ammonium bicarbonate was added thereto by 1.1 times the theoretical amount; the clinker was feed into the leaching equipment and reacted at 45°C for 6h. After completion of the reaction, the leached ore slurry was subjected to pressure filtration, and the filter cake was washed with purified water three times. Leaching rate of tungsten was 97.09%. After that, the procedures were similar to Example 3, but with supplemented ammonium carbonate, ammonium bicarbonate, aqua ammonia, and CO₂.
Example 72: In accordance with a molecular ratio of CaO/WO₃ being 3.1, a scheelite (mass percentage of WO₃ was 49.53%, and mass percentage of Fe was 0.43%) was finely ground with a clinker leached slag and calcium fluoride, and then mixed uniformly to obtain a crude material, calcium fluoride was added in an amount that was 4.8% (mass percentage) of the amount of dry tungsten ore raw material, particle size of the crude material was ≤45µm; and then, in a calcinating furnace, calcination was carried out at 880°C under a reducing atmosphere for 1h to obtain a clinker. After the clinker was cooled to room temperature, it was finely ground with a vibration mill, particle size of the clinker was ≤74µm; a ball-milling leacher was chosed as the leaching equipment, internally charged with a saturated solution of ammonium carbonate; the clinker was feed into the leaching equipment, aqua ammonia was added simultaneously (such that the mass percentage of NH₃ in the leaching solution was 7.5%) and enclosed, reaction was carried out at 32°C for 3.8h. After completion of the reaction, the leached ore slurry was subjected to suction filtration, and the filter cake was washed with purified water three times. Leaching rate of tungsten was 97.75%. After that, the procedures were similar to Example 3, but with supplemented aqua ammonia and CO₂.
Example 73: In accordance with a molecular ratio of CaO/WO₃ being 3.8, a scheelite (mass percentage of WO₃ was 49.53%, and mass percentage of Fe was 0.43%) was finely ground with a clinker leached slag and calcium fluoride, and then mixed uniformly to obtain a crude material, calcium fluoride was added in an amount that was 0.7% (mass percentage) of the amount of dry tungsten ore raw material, particle size of the crude material was ≤45µm; and then, in a calcinating furnace, calcination was carried out at 880°C under a neutral atmosphere for 9h to obtain a clinker. After the clinker was cooled to room temperature, it was finely ground with a ball mill, particle size of the clinker was ≤74µm; a ball-milling leacher was chosed as the leaching equipment, internally charged with a saturated solution of ammonium carbonate;the clinker was feed into the leaching equipment, aqua ammonia was added simultaneously (such that the mass percentage of NH₃ in the leaching solution was 8.6%) and enclosed, reaction was carried out at 32°C for 3.8h. After completion of the reaction, the leached ore slurry was subjected to suction filtration, and the filter cake was washed with purified water three times. Leaching rate of tungsten was 98.65%. After that, the procedures were similar to Example 3, but with supplemented ammonium carbonate, aqua ammonia, and CO₂.
Example 74: In accordance with a molecular ratio of CaO/WO₃ being 3.7, a scheelite (mass percentage of WO₃ was 49.53%, and mass percentage of Fe was 0.43%) was finely ground with a clinker leached slag and calcium fluoride, and then mixed uniformly to obtain a crude material, calcium fluoride was added in an amount that was 4.5% (mass percentage) of the amount of dry tungsten ore raw material, particle size of the crude material was ≤45µm; and then, in a calcinating furnace, calcination was carried out at 800°C under an air atmosphere for 2.0h to obtain a clinker. After the clinker was cooled to room temperature, it was finely ground with a vibration ore mill, particle size of the clinker was ≤45µm; a 25.0g finely ground clinker was weighed and added to a reaction vessel equipped with aeration and mechanical stirring means, a 100mL ammonium carbonate solution of 60g-(NH₄)₂CO₃/100g-H₂O was added simultaneously and it was enclosed; after that, a CO₂ gas was introduced to control the absolute pressure of the reaction system at 2atm, and reaction was carried out at 80°C for 4h. After completion of the reaction, the leached ore slurry was subjected to vacuum suction filtration, and the filter cake was washed with purified water three times. Leaching rate of tungsten in the clinker was 97.25%.
Example 75: In accordance with a molecular ratio of (CaO+FeO)/WO₃ being 4.5, a mixed ore of wolframite-scheelite (mass percentage of WO₃ was 63.75%, and mass percentage of Fe was 5.90%) was finely ground with a clinker leached slag and calcium fluoride, and then mixed uniformly to obtain a crude material, calcium fluoride was added in an amount that was 0.5% (mass percentage) of the amount of dry tungsten ore raw material, particle size of the crude material was ≤45µm; and then, in a shaft furnace, calcination was carried out at 1000°C under a weak reducing atmosphere for 3.0h to obtain a clinker. After the clinker was cooled to room temperature, it was finely ground with a ball mill, particle size of the clinker was ≤45µm; a 30.0g finely ground clinker was weighed and added to a reaction vessel equipped with aeration and mechanical stirring means, a 100mL ammonium carbonate solution of 45g-(NH₄)₂CO₃/100g-H₂O was added simultaneously and it was enclosed; after that, a CO₂ gas was introduced to control the absolute pressure of the reaction system at 2atm, and reaction was carried out at 70°C for 4h. After completion of the reaction, the leached ore slurry was subjected to vacuum suction filtration, and the filter cake was washed with purified water three times. Leaching rate of tungsten in the clinker was 95.17%.
Example 76: In accordance with a molecular ratio of (CaO+FeO)/WO₃ being 3.8, a wolframite (mass percentage of WO₃ was 60.40%, and mass percentage of Fe was 15.08%) was finely ground with a clinker leached slag and calcium fluoride, and then mixed uniformly to obtain a crude material, calcium fluoride was added in an amount that was 3% (mass percentage) of the amount of dry tungsten ore raw material, particle size of the crude material was ≤45µm; and then, in a tubular calcinating furnace, calcination was carried out at 800°C under a neutral atmosphere for 6.0h to obtain a clinker. After the clinker was cooled to room temperature, it was finely ground with a rod mill, particle size of the clinker was ≤45µm; a leaching tank with stirring was chosed as the leaching equipment, internally charged with a saturated solution of ammonium carbonate, and ammonium bicarbonate was added thereto by 1.2 times the theoretical amount; the clinker was feed into the leaching equipment and reacted at 80°C for 4h. After completion of the reaction, the leached ore slurry was subjected to vacuum suction filtration, and the filter cake was washed with purified water three times. Leaching rate of tungsten was 97.13%. After that, the procedures were similar to Example 3, supplementing the loss of ammonium carbonate.
Example 77: In accordance with a molecular ratio of (CaO+FeO)/WO₃ being 3.5, a wolframite (mass percentage of WO₃ was 42.17%, and mass percentage of Fe was 11.34%) was finely ground with a clinker leached slag and calcium fluoride, and then mixed uniformly to obtain a crude material, calcium fluoride was added in an amount that was 0.9% (mass percentage) of the amount of dry tungsten ore raw material, particle size of the crude material was ≤45µm; and then, in a calcinating furnace, calcination was carried out at 950°C under a weak reducing atmosphere for 5.0h to obtain a clinker. After the clinker was cooled to room temperature, it was finely ground with a stirring mill, particle size of the clinker was ≤40µm; a ball-milling digester was chosed as the leaching equipment, internally charged with a saturated solution of ammonium carbonate, and ammonium bicarbonate was added thereto by 1.1 times the theoretical amount; the clinker was feed into the leaching equipment and reacted at 75°C for 4h. After completion of the reaction, the leached ore slurry was subjected to vacuum suction filtration, and the filter cake was washed with purified water three times. Leaching rate of tungsten was 96.78%. After that, the procedures were similar to Example 3, but with supplemented ammonium bicarbonate.
Example 78: In accordance with a molecular ratio of CaO/WO₃ being 6.0, a scheelite (mass percentage of WO₃ was 49.53%, and mass percentage of Fe was 0.43%) was finely ground with a clinker leached slag and calcium fluoride, and then mixed uniformly to obtain a crude material, calcium fluoride was added in an amount that was 2.4% (mass percentage) of the amount of dry tungsten ore raw material, particle size of the crude material was ≤30µm; and then, in a calcinating furnace, calcination was carried out at 870°C under a neutral atmosphere for 4h to obtain a clinker. After the clinker was cooled to room temperature, it was finely ground with a planetary mill, particle size of the clinker was ≤74µm; a ball-milling leacher was chosed as the leaching equipment, internally charged with a saturated solution of ammonium carbonate;the clinker was feed into the leaching equipment, aqua ammonia was added simultaneously (such that the mass percentage of NH₃ in the leaching solution was 6.5%) and enclosed, reaction was carried out at 30°C for 4h. After completion of the reaction, the leached ore slurry was subjected to suction filtration, and the filter cake was washed with purified water three times. Leaching rate of tungsten was 98.09%. After that, the procedures were similar to Example 3, but with supplemented aqua ammonia and CO₂.
Example 79: In accordance with a molecular ratio of (CaO+FeO)/WO₃ being 7, a scheelite (mass percentage of WO₃ was 52.33%, and mass percentage of Fe was 2.04%) was finely ground with a clinker leached slag, and then mixed uniformly to obtain a crude material, particle size of the crude material was ≤25µm; and then, in a calcinating furnace, calcination was carried out at 1000°C under a neutral atmosphere for 7h to obtain a clinker. After the clinker was cooled to room temperature, it was finely ground with a vibration mill, particle size of the clinker was ≤45µm; a ball-milling leacher was chosed as the leaching equipment, internally charged with an ammonium carbonate solution, the concentration of ammonium carbonate was 60g-(NH₄)₂CO₃ /100g-H₂O, and ammonium bicarbonate was added thereto by 1.3 times the theoretical amount; the clinker was feed into the leaching equipment and reacted at 40°C for 9h. After completion of the reaction, the leached ore slurry was subjected to suction filtration, and the filter cake was washed with purified water three times. Leaching rate of tungsten was 98.03%. After that, the procedures were similar to Example 3, and the APT product met the state standards for grade 0 products.
Example 80: In accordance with a molecular ratio of CaO/WO₃ being 3.0, a scheelite (mass percentage of WO₃ was 49.53%, and mass percentage of Fe was 0.43%) was finely ground with a clinker leached slag and calcium fluoride, and then mixed uniformly to obtain a crude material, calcium fluoride was added in an amount that was 3.2% (mass percentage) of the amount of dry tungsten ore raw material, particle size of the crude material was ≤45µm; and then, in a calcinating furnace, calcination was carried out at 950°C under a neutral atmosphere for 5h to obtain a clinker. After the clinker was cooled to room temperature, it was finely ground with a Raymond mill, particle size of the clinker was ≤8µm; a leaching tank with stirring was chosed as the leaching equipment, internally charged with a saturated solution of ammonium carbonate;the clinker was feed into the leaching equipment, aqua ammonia was added simultaneously (such that the mass percentage of NH₃ in the leaching solution was 10.0%) and enclosed, the absolute pressure of the leaching system was controlled at 1.0atm, and reaction was carried out at 20°C for 12h. After completion of the reaction, the leached ore slurry was subjected to suction filtration, and the filter cake was washed with purified water three times. Leaching rate of tungsten was 96.20%. After that, the procedures were similar to Example 3, but with supplemented ammonium bicarbonate, aqua ammonia and CO₂.
Example 81: In accordance with a molecular ratio of CaO/WO₃ being 8, a tungsten slime (mass percentage of WO₃ was 16.22%) was finely ground with a clinker leached slag, and then mixed uniformly to obtain a crude material, particle size of the crude material was ≤45µm; and then, in a calcinating furnace, calcination was carried out at 950°C under a reducing atmosphere for 3h to obtain a clinker. After the clinker was cooled to room temperature, it was finely ground with a ball mill, particle size of the clinker was ≤45µm; a leaching tank with stirring was chosed as the leaching equipment, internally charged with a saturated solution of ammonium carbonate;the clinker was feed into the leaching equipment, aqua ammonia was added simultaneously (such that the mass percentage of NH₃ in the leaching solution was 6.3%) and enclosed, reaction was carried out at 35°C for 15h. After completion of the reaction, the leached ore slurry was subjected to suction filtration, and the filter cake was washed with purified water three times. Leaching rate of tungsten was 91.51%. After that, it was supplemented with aqua ammonia and CO₂.
Example 82: In accordance with a molecular ratio of (CaO+FeO)/WO₃ being 3.6, a scheelite (mass percentage of WO₃ was 52.33%, and mass percentage of Fe was 2.04%) was finely ground with a clinker leached slag and calcium fluoride, and then mixed uniformly to obtain a crude material, calcium fluoride was added in an amount that was 4.1 % (mass percentage) of the amount of dry tungsten ore raw material, particle size of the crude material was ≤45µm; and then, in a calcinating furnace, calcination was carried out at 965°C under a neutral atmosphere for 1.5h to obtain a clinker. After the clinker was cooled to room temperature, it was finely ground with a vibration mill, particle size of the clinker was ≤60µm; a ball-milling leacher was chosed as the leaching equipment, internally charged with a mixed solution of ammonium carbonate-ammonium tungstate, the concentration of ammonium carbonate was 45g-(NH₄)₂CO₃/100g-H₂O, the concentration of WO₃ in the solution was 40g/L, and ammonium bicarbonate was added thereto by 2 times the theoretical amount; the clinker was feed into the leaching equipment and reacted at 18°C for 6.5h. After completion of the reaction, the leached ore slurry was subjected to suction filtration, and the filter cake was washed with purified water three times. Leaching rate of tungsten was 97.96%. After that, the procedures were similar to Example 3, and the APT product met the state standards for grade 0 products.
Example 83: In accordance with a molecular ratio of (CaO+FeO)/WO₃ being 3.3, a mixed ore of wolframite-scheelite (mass percentage of WO₃ was 43.20%, and mass percentage of Fe was 7.18%) was finely ground with a clinker leached slag and calcium fluoride, and then mixed uniformly to obtain a crude material, calcium fluoride was added in an amount that was 2.2% (mass percentage) of the amount of dry tungsten ore raw material, particle size of the crude material was ≤45µm; and then, in a calcinating furnace, calcination was carried out at 850°C under a neutral atmosphere for 3h to obtain a clinker. After the clinker was cooled to room temperature, it was finely ground with a rod mill, particle size of the clinker was ≤45µm; a ball-milling leacher was chosed as the leaching equipment, internally charged with an ammonium carbonate solution, the concentration of ammonium carbonate was 40g-(NH₄)₂CO₃/100g-H₂O, and ammonium bicarbonate was added thereto by 1.25 times the theoretical amount; the clinker was feed into the leaching equipment and reacted at 42°C for 20h. After completion of the reaction, the leached ore slurry was subjected to suction filtration, and the filter cake was washed with purified water three times. Leaching rate of tungsten was 98.76%. After that, the procedures were similar to Example 3, but with supplemented ammonium carbonate and ammonium bicarbonate, and the APT product met the state standards for grade 0 products.
Example 84: In accordance with a molecular ratio of CaO/WO₃ being 9, a scheelite (mass percentage of WO₃ was 49.53%, and mass percentage of Fe was 0.43%) was finely ground with a clinker leached slag and calcium fluoride, and then mixed uniformly to obtain a crude material, calcium fluoride was added in an amount that was 0.55% (mass percentage) of the amount of dry tungsten ore raw material, particle size of the crude material was ≤30µm; and then, in a calcinating furnace, calcination was carried out at 950°C under a neutral atmosphere for 4h to obtain a clinker. After the clinker was cooled to room temperature, it was finely ground with a ball mill, particle size of the clinker was ≤45µm; a leaching tank with stirring was chosed as the leaching equipment, internally charged with a mixed solution of saturated ammonium carbonate and ammonium tungstate containing 60g/L WO₃; the clinker was feed into the leaching equipment, aqua ammonia was added simultaneously (such that the mass percentage of NH₃ in the leaching solution was 9.1%) and enclosed, reaction was carried out at 37°C for 4.5h. After completion of the reaction, the leached ore slurry was subjected to pressure filtration, and the filter cake was washed with purified water three times. Leaching rate of tungsten was 98.72%. After that, the procedures were similar to Example 3, but with supplemented aqua ammonia and CO₂.
Example 85: In accordance with a molecular ratio of CaO/WO₃ being 2.7, a scheelite (mass percentage of WO₃ was 49.53%, and mass percentage of Fe was 0.43%) was finely ground with a clinker leached slag, and then mixed uniformly to obtain a crude material, particle size of the crude material was ≤45µm; and then, in a calcinating furnace, calcination was carried out at 845°C under a neutral atmosphere for 2.5h to obtain a clinker. After the clinker was cooled to room temperature, it was finely ground with an overhang roll crusher, particle size of the clinker was ≤74µm; a leaching tank with stirring was chosed as the leaching equipment, internally charged with a saturated solution of ammonium carbonate, and ammonium bicarbonate was added thereto by 1.2 times the theoretical amount;the clinker was feed into the leaching equipment and reacted at 45°C for 4.5h. After completion of the reaction, the leached ore slurry was subjected to suction filtration, and the filter cake was washed with purified water three times. Leaching rate of tungsten was 81.65%. After that, the procedures were similar to Example 3, but with supplemented aqua ammonia and CO₂.
Example 86: In accordance with a molecular ratio of CaO/WO₃ being 3.8, a scheelite (mass percentage of WO₃ was 49.53%, and mass percentage of Fe was 0.43%) was finely ground with a clinker leached slag and calcium fluoride, and then mixed uniformly to obtain a crude material, calcium fluoride was added in an amount that was 1.5% (mass percentage) of the amount of dry tungsten ore raw material, particle size of the crude material was ≤45µm; and then, in a calcinating furnace, calcination was carried out at 870°C under a neutral atmosphere for 1h to obtain a clinker. After the clinker was cooled to room temperature, it was finely ground with a ball mill, particle size of the clinker was ≤45µm; a leaching tank with ball-milling was chosed as the leaching equipment, internally charged with a supersaturated slurry of ammonium carbonate, the concentration of ammonium carbonate was 100g (NH₄)₂CO₃/100g H₂O; the clinker was feed into the leaching equipment, aqua ammonia was added simultaneously (such that the mass percentage of NH₃ in the leaching solution was 6.5%) and enclosed, reaction was carried out at 52°C for 3.8h. After completion of the reaction, the leached ore slurry was subjected to suction filtration, and the filter cake was washed with purified water three times. Leaching rate of tungsten was 98.25%. After that, the procedures were similar to Example 3, but with supplemented ammonium carbonate, ammonium bicarbonate, aqua ammonia, and CO₂.
Example 87: In accordance with a molecular ratio of (CaO+FeO)/WO₃ being 4.5, a scheelite (mass percentage of WO₃ was 52.33%, and mass percentage of Fe was 2.04%) was finely ground with a limestone and a fluorite, the fluorite was added in an amount that was 2.6% (mass percentage) of the amount of dry tungsten ore raw material, particle size of the crude material was ≤45µm; and then, in a calcinating furnace, calcination was carried out at 920°C under a reducing atmosphere for 2h to obtain a clinker. After the clinker was cooled to room temperature, it was finely ground with a Raymond mill, particle size of the clinker was <8µm; a stirring leacher was chosed as the leaching equipment, internally charged with a saturated solution of ammonium carbonate, and ammonium bicarbonate was added thereto by 1.2 times the theoretical amount; the clinker was feed into the leaching equipment and reacted at 38°C for 5h. After completion of the reaction, the leached ore slurry was subjected to suction filtration, and the filter cake was washed with purified water 2 times. Leaching rate of tungsten was 98.12%. After that, the procedures were similar to Example 3, and the APT product met the state standards for grade 0 products.
Example 88: In accordance with a molecular ratio of (CaO+FeO)/WO₃ being 3.4, a scheelite (mass percentage of WO₃ was 52.33%, and mass percentage of Fe was 2.04%) was finely ground with a slag after clinker leaching in Example 86 (the main component was CaC03) and calcium fluoride, and then mixed uniformly to obtain a crude material, calcium fluoride was added in an amount that was 4.1% (mass percentage) of the amount of dry tungsten ore raw material, particle size of the crude material was ≤100µm; and then, in a calcinating furnace, calcination was carried out at 960°C under a neutral atmosphere for 2h to obtain a clinker. After the clinker was cooled to room temperature, it was finely ground with a vibration mill, particle size of the clinker was ≤45µm; a stirring leacher was chosed as the leaching equipment, internally charged with a saturated solution of ammonium carbonate, and ammonium bicarbonate was added thereto by 1.2 times the theoretical amount; the clinker was feed into the leaching equipment and reacted at 50°C for 3h. After completion of the reaction, the leached ore slurry was subjected to suction filtration, and the filter cake was washed with purified water 5 times. Leaching rate of tungsten was 98.39%. After that, the procedures were similar to Example 3, and the APT product met the state standards for grade 0 products.
Example 89: In accordance with a molecular ratio of (CaO+FeO)/WO₃ being 4.2, a scheelite (mass percentage of WO₃ was 52.33%, and mass percentage of Fe was 2.04%) was finely ground with a slag after clinker leaching in Example 88 and calcium fluoride, and then mixed uniformly to obtain a crude material, calcium fluoride was added in an amount that was 0.2% (mass percentage) of the amount of dry tungsten ore raw material, particle size of the crude material was ≤74µm, and then, in a calcinating furnace, calcination was carried out at 980°C under a neutral atmosphere for 1.5h to obtain a clinker. After the clinker was cooled to room temperature, it was finely ground with a vibration mill, particle size of the clinker was ≤85µm; a ball-milling leacher was chosed as the leaching equipment, internally charged with a supersaturated slurry of ammonium carbonate, the concentration of ammonium carbonate was 120g (NH₄)₂CO₃/100g H₂O, and ammonium bicarbonate was added thereto by 1.5 times the theoretical amount; the clinker was feed into the leaching equipment and reacted at 70°C for 6h. After completion of the reaction, the leached ore slurry was subjected to pressure filtration, and the filter cake was washed with purified water 4 times. Leaching rate of tungsten was 97.23%. After that, the procedures were similar to Example 3, but with supplemented ammonium carbonate and ammonium bicarbonate, and the APT product met the state standards for grade 0 products.
Example 90: In accordance with a molecular ratio of (CaO+FeO)/WO₃ being 7, a scheelite (mass percentage of WO₃ was 52.33%, and mass percentage of Fe was 2.04%) was finely ground with a clinker leached slag, and then mixed uniformly to obtain a crude material, particle size of the crude material was ≤80µm, and then, in a calcinating furnace, calcination was carried out at 1000°C under a neutral atmosphere for 7h to obtain a clinker. After the clinker was cooled to room temperature, it was finely ground with a vibration mill, particle size of the clinker was ≤45µm; a ball-milling leacher was chosed as the leaching equipment, internally charged with a saturated solution of ammonium carbonate, and ammonium bicarbonate was added thereto by 1.3 times the theoretical amount; the clinker was feed into the leaching equipment and reacted at 40°C for 24h. After completion of the reaction, the leached ore slurry was subjected to suction filtration, and the filter cake was washed with purified water three times. Leaching rate of tungsten was 98.66%. After that, the procedures were similar to Example 3, and the APT product met the state standards for grade 0 products.
Example 91: In accordance with a molecular ratio of CaO/WO₃ being 4, a scheelite (mass percentage of WO₃ was 49.53%, and mass percentage of Fe was 0.43%) was finely ground with a clinker leached slag, and then mixed uniformly to obtain a crude material, particle size of the crude material was ≤53µm, and then, in a calcinating furnace, calcination was carried out at 950°C under a neutral atmosphere for 10h to obtain a clinker. After the clinker was cooled to room temperature, it was finely ground with a ball mill, particle size of the clinker was ≤45µm; a leaching tank with stirring was chosed as the leaching equipment, internally charged with a saturated solution of ammonium carbonate;the clinker was feed into the leaching equipment, aqua ammonia was added simultaneously (such that the mass percentage of NH3 in the leaching solution was 13.0%) and enclosed, reaction was carried out at 40°C for 20h. After completion of the reaction, the leached ore slurry was subjected to suction filtration, and the filter cake was washed with purified water three times. Leaching rate of tungsten was 99.01%. After that, the procedures were similar to Example 3, but with supplemented aqua ammonia and CO₂.
Example 92: In accordance with a molecular ratio of CaO/WO₃ being 8, a tungsten slime (mass percentage of WO₃ was 16.22%) was finely ground with a clinker leached slag and calcium fluoride, and then mixed uniformly to obtain a crude material, calcium fluoride was added in an amount that was 6.5% (mass percentage) of the amount of dry tungsten ore raw material, particle size of the crude material was ≤45µm, and then, in a calcinating furnace, calcination was carried out at 750°C under a reducing atmosphere for 0.5h to obtain a clinker. After the clinker was cooled to room temperature, it was finely ground with a centrifugal mill, particle size of the clinker was ≤45µm; a ball-milling leacher was chosed as the leaching equipment, internally charged with a saturated solution of ammonium carbonate;the clinker was feed into the leaching equipment, aqua ammonia was added simultaneously (such that the mass percentage of NH₃ in the leaching solution was 8.5%) and enclosed, reaction was carried out at 45°C for 4h. After completion of the reaction, the leached ore slurry was subjected to suction filtration, and the filter cake was washed with purified water three times. Leaching rate of tungsten was 94.51%. After that, the procedures were similar to Example 3, but with supplemented ammonium carbonate, ammonium bicarbonate, aqua ammonia, and CO₂.

Through many years of exploration and practice by the present inventors, it is shown that one skilled in the art has no motivation to contemplate the technical concept of the present invention, and there is no "common knowledge" or "conventional means" involved. To say the least, even with such concepts, multiple factors involved often affect and restrict each other with no mutual independence; even with modernized scientific methods such as orthogonal design, there are still countless possibilities of combination, and technical solutions with sufficient excellence can not be predicted; proper values for various factors can not be obtained by "limited experiments", and technical solutions with sufficient excellence are not "obvious".

The numerous examples described above are not for limiting the present invention. Those skilled in the art will appreciate that, without departing from the spirit and concept of the present invention, any modifications, supplements, improvements, and replacements to the details and forms of the technical solutions of the present invention are within the scope of the appended claims.

## Claims

1. A metallurgical process for tungsten ore raw material, **characterized in that**,
weak base leaching agent(s) conducive to the formation of local process circulations is/are used (in stead of strong base or strong acid leaching agents in prior art), two or more gases are generated by leaching solution thereof during evaporative crystallization, and the gases are capable of participating in synthesis of the leaching agent again; the separating-washing/scrubbing liquid after crystallization is recycled to be also used as a leaching agent; and
a transformation compounding ingredient (transformation ingredient) is used to make chemical reactions with the tungsten ore raw material, so that make tungsten element be alternatively contained in an intermediate material which is easily dissolved by said weak base leaching agent(s), and make the leached slag also contain elements of the transformation compounding ingredient, so that at least part of the leached slag can be recycled to be used as the transformation compounding ingredient,
therefore, the process comprises a plurality of closed circulations, and there is no wastewater discharge throughout.

2. The metallurgical process of claim 1, **characterized in that** the process comprises the steps of:
adding a transformation compounding ingredient (preferably, also adding a mineralization agent) to the tungsten ore raw material, grinding and mixing uniformly to prepare a crude material, and then calcinating, such that element of tungsten is changed to be contained in an intermediate material from which the tungsten element is easily leached by said leaching agent; providing a means for recovering at least part of the leached slag in the step of material preparation;
using a selected leaching agent to leach the intermediate material, providing in the leaching step a recovering means for gases of the reaction of the leaching agent, a recovering means for crystallization slurry separating-washing liquid, a recovering means for slag phase washing liquid, and a means for supplying supplemented leaching agent in accordance with actual needs;
subjecting the leached slurry to solid-liquid separation to obtain a crude solution containing element of tungsten and the leached slag containing elements of the compounding ingredient, washing the slag phase, feeding the washing liquid to the step of clinker leaching (the first closed circulation), and according to actual needs, feeding at least part of the leached slag back serving as the compounding ingredient for repeated use of the compounding ingredient (the second closed circulation) (stockpiling the remaining part of the leached slag, if there is any);
subjecting the crude solution containing element of tungsten to at least one stage of purification for impurity removal (preferably, an induced-draft means can be additionally provided in the last stage);
subjecting the purified solution to evaporative crystallization to liberate an intermediate product containing element of tungsten; at the same time, returning the released gases to the step of leaching (the third closed circulation), and feeding the evaporated water to the step of solid-liquid separation of the leached slurry (the fourth closed circulation);
subjecting the slurry after crystallization to liquid-solid separation to obtain a crystallization mother liquor and a solid phase, washing the solid phase with water and/or ammonium salt solution and oven drying, then obtaining the final product containing element of tungsten (preferably the solid phase is again dissolved and crystalized to obtain a final product with a higher purity); and also returning the crystallization mother liquor to the step of clinker leaching (the fifth closed circulation).

3. The metallurgical process according to claim 1, **characterized in that** said tungsten ore raw material includes a scheelite, a wolframite, a mixed ore of wolframite-scheelite, and/or a tungsten slime.

4. The metallurgical process according to claim 1, **characterized in that** said transformation comprises finely grinding a tungsten ore raw material and a compounding ingredient and then mixing them uniformly to prepare a crude material; and calcinating the crude material to obtain a clinker (preferably the clinker is crushed and ground finely).

5. The metallurgical process according to claim 1, **characterized in that** said weak bases are ammonium carbonate, ammonium bicarbonate, aqua ammonia, aqua ammonia+CO₂ gas, as well as any mixtures thereof, and/or any mixtures thereof with ammonium tungstate.

6. The metallurgical process according to claim 1, **characterized by** further comprising at least one of the following additional technical features:
after the crystallization slurry is subjected to liquid-solid separation and/or washing, the crystallization mother liquor and the washing liquid are mixed with the collected ammonia gas and carbon dioxide, and then (or separately) fed back to the leaching device for the clinker, the solid is either subjected to washing and oven drying to obtain the product APT, or gets into a subsystem of next stage for dissolution, crystallization and purification;
said compounding ingredient is a material containing CaCO₃, in which the CaCO₃ is added in an amount of at least 1.0 in accordance with a molecular ratio of CaO/WO₃, (CaO+FeO)/WO₃, (CaO+MnO)/WO₃, or (CaO+FeO+MnO)/WO₃ in the crude material, preferably in an amount of 1.5-6.0, more preferably 3.0-4.0, and much more preferably 3.3-3.6;
particle size of said crude material is not particularly limited, but preferably not larger than 200µm, more preferably not larger than 100µm, and much more preferably not larger than 40µm;
the crude material is calcinated at a temperature of not lower than 500°C, preferably 800-1050°C, and more preferably 850-950°C; and
the crude material is calcinated for a time of 0.5-8.0h, preferably 1.0-3.0h, and more preferably 2.0h.

7. The metallurgical process according to claim 1, **characterized in that** for the raw material of scheelite, calcination atmosphere is not particularly limited, preferably a neutral or an oxidizing atmosphere; and for the raw material of wolframite, mixed ore of wolframite-scheelite and/or tungsten slime, the calcination atmosphere is a neutral or a reducing atmosphere, preferably a neutral atmosphere.

8. The metallurgical process according to claim 1, **characterized in that** particle size of the clinker is not particularly limited, but preferably not larger than 200µm, more preferably not larger than 74µm, and much more preferably not larger than 45µm.

9. The metallurgical process according to claim 1, **characterized by** further comprising at least one of the following additional technical features:
a part of CO₂ in the leaching system is from a furnace (kiln) gas produced during the calcination of the crude material or from a commercial CO₂, and another part of CO₂ is from the CO₂ produced during the evaporative crystallization of the ammonium tungstate solution; CO₂ can be introduced during leaching, or it can be introduced before leaching;
the concentration of ammonium carbonate in the initial system for leaching is greater than 20g-(NH₄)₂CO₃/100g-H₂O, preferably is the concentration of its saturated solution for the system;
ammonium bicarbonate is added in a solution or solid form, and the added amount of ammonium bicarbonate is not particularly limited, preferably not less than 1.0 times of the amount that is required to convert the calcium in the clinker into CaCO₃ (theoretical amount), and more preferably is 1.1-1.4 times of the theoretical amount;
the added amount of aqua ammonia is not particularly limited either, but preferably the mass percentage of NH₃ in the initial system for leaching is 0-28%, more preferably 5-20%, and more preferably 5-10%; and
the concentration of ammonium tungstate is not particularly limited, as long as that after tungsten in the clinker is sufficiently leached, the concentration of ammonium tungstate in the resultant solution is ensured not exceeding the equilibrium concentration for the system.

10. The metallurgical process according to claim 1, **characterized by** further comprising at least one of the following additional technical features:
clinker leaching is carried out in an enclosed system, and when the clinker is leached with a system of ammonium carbonate, a system of ammonium carbonate-ammonium bicarbonate, a system of ammonium carbonate-aqua ammonia, a system of ammonium carbonate-ammonium bicarbonate-ammonium tungstate, a system of ammonium carbonate-aqua ammonia-ammonium tungstate, or a system of ammonium carbonate-ammonium tungstate, absolute pressure of the reaction system is not particularly limited;
when the clinker is leached with a system of ammonium carbonate-CO₂, a system of ammonium carbonate-ammonium bicarbonate-CO₂, a system of ammonium carbonate-aqua ammonia-CO₂, a system of ammonium carbonate-ammonium tungstate-CO₂, a system of ammonium carbonate-aqua ammonia-ammonium tungstate-CO₂, or a system of ammonium carbonate-ammonium bicarbonate-ammonium tungstate-CO₂, it is needed to control the absolute pressure of the reaction system to be not less than 1 atm, preferably 2atm;
leaching temperature is not lower than 5°C, preferably 10-80°C, more preferably 20-70°C, and much more preferably 30-50°C;
leaching time is preferably 0.5-8.0h, more preferably leaching time is 2-5h (leaching time is not particularly limited, as long as that tungsten in the clinker is ensured to be leached sufficiently); and
purifying process for impurity removal comprises a process of removing at least one of molybdenum, phosphorus, tin, arsenic, silicon, iron, sodium, potassium, bismuth, antimony, calcium, and magnesium.
